# EUROPEAN PATENT APPLICATION

(11) **EP 4 618 690 A1**
(43) Date of publication of application: **17.09.2025**
(21) Application number: 22964743.3
(22) Date of filing: 08.11.2022
(51) Int. Cl.: H04W 84/18, H04W 24/04, H04L 1/08

(54) **INFORMATION TRANSMISSION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: XIONG, Yi, Beijing 100085 (CN)
(74) Representative: Gunzelmann, Rainer
(86) International application number: PCT/CN2022/130738
(87) International publication number: WO 2024/098268

(57) **Abstract**

Provided in the embodiments of the present disclosure are an information transmission method and apparatus, a communication device, and a storage medium. The method comprises: a first network node sending first information of a user equipment (UE) to a second network node, wherein the first information is used for mobility management of the UE.

## Description

### TECHNICAL FIELD

The present disclosure relates to, but is not limited to, the field of wireless communication technology, and specifically to an information transmission method and apparatus, and a communication device and storage medium.

### BACKGROUND

In recent years, aerial vehicles such as unmanned aerial vehicles (UAVs) have become increasingly popular. The interest in drone-based services has increased globally, including a variety of drone operations, personal entertainment through flying experiences, cargo delivery, etc. As a basis for these services, remote control and data transmission capabilities are key aspects of enhancement, which are of interest to service providers/operators as well as drone manufacturers.

According to relevant research, the feasibility of UAV connection through a terrestrial cellular system and the required enhancements have been verified, and a long-term evolution (LTE) system has made corresponding enhancements in uplink (UL) and downlink (DL) interference and mobility.

In a new radio (NR) system, applications suitable for the UAV are more diverse, and the latency requirement for UAV is lower and the requirement for transmission rate is higher, such that some enhancements need to be made to the mobility of NR UAVs based on LTE UAVs.

### SUMMARY

Embodiments of the present disclosure provide an information transmission method and apparatus, a communication device and a storage medium.

According to a first aspect of the embodiments of the present disclosure, an information transmission method is provided, performed by a first network node, including: sending, by the first network node, first information of a user equipment (UE) to a second network node, in which the first information is used for mobility management of the UE.

According to a second aspect of the embodiments of the present disclosure, an information transmission method is provided, performed by a second network node, including: receiving first information of a UE sent by a first network node, in which the first information is used for mobility management of the UE.

According to a third aspect of the embodiments of the present disclosure, an information transmission method is provided, performed by a UE, including: sending first information of the UE or second indication information to a second network node during a process of the UE accessing the second network node, in which the second indication information indicates whether the first information of the UE from a first network node is valid, and the first information is used for mobility management of the UE.

According to a fourth aspect of the embodiments of the present disclosure, an information transmission method is provided, performed by a second network node, including: receiving first information of a UE or second indication information sent by the UE during a process of the UE accessing the second network node, in which the second indication information indicates whether the first information of the UE from a first network node is valid, and the first information is used for mobility management of the UE.

According to a fifth aspect of the embodiments of the present disclosure, an information transmission method is provided, performed by a UE, including: sending first information of the UE to a second network node, in which the first information is used for mobility management of the UE, and the second network node is a secondary node in a dual connectivity network.

According to a sixth aspect of the embodiments of the present disclosure, an information transmission method is provided, performed by a second network node, in which the second network node is a secondary node in a dual connectivity network and the method includes: receiving first information of a UE sent by the UE, in which the first information is used for mobility management of the UE.

According to a seventh aspect of the embodiments of the present disclosure, an information transmission apparatus is provided, applied in a first network node, including: a sending module, configured to send first information of a UE to a second network node, in which the first information is used for mobility management of the UE.

According to an eighth aspect of the embodiments of the present disclosure, an information transmission apparatus is provided, applied in a second network node, including: a receiving module, configured to receive first information of a UE sent by a first network node, in which the first information is used for mobility management of the UE.

According to a ninth aspect of the embodiments of the present disclosure, an information transmission apparatus is provided, applied in a UE, including: a sending module, configured to send first information of the UE or second indication information to a second network node during a process of the UE accessing the second network node, in which the second indication information indicates whether the first information of the UE from a first network node is valid, and the first information is used for mobility management of the UE.

According to a tenth aspect of the embodiments of the present disclosure, an information transmission apparatus is provided, applied in a second network node, including: a receiving module, configured to receive first information of a UE or second indication information sent by the UE during a process of the UE accessing the second network node, in which the second indication information indicates whether the first information of the UE from a first network node is valid, and the first information is used for mobility management of the UE.

According to an eleventh aspect of the embodiments of the present disclosure, an information transmission apparatus is provided, applied in a UE, including: a sending module, configured to send first information of the UE to a second network node, in which the first information is used for mobility management of the UE, and the second network node is a secondary node in a dual connectivity network.

According to a twelfth aspect of the embodiments of the present disclosure, an information transmission apparatus is provided, applied in a second network node, in which the second network node is a secondary node in a dual connectivity network and the method includes: a receiving module, configured to receive first information of a UE sent by the UE, in which the first information is used for mobility management of the UE.

According to a thirteenth aspect of the embodiments of the present disclosure, a communication device is provided, comprising: a processor, a memory, and an executable program stored in the memory and executable by the processor, wherein the processor performs the information transmission method of any one of the first aspect to the sixth aspect when running the executable program.

According to a fourteen aspect of the embodiments of the present disclosure, a computer storage medium for storing an executable program, wherein when the executable program is executed, the information transmission method of any one of the first aspect to the sixth aspect is implemented.

With the technical solution of the embodiments of the present disclosure, the first network node sends the first information of the UE to the second network node. In this way, in a scenario where the UE frequently performs mobility operations, compared to a solution that the second network node can obtain the first information of the UE only after accessing of the UE, a delay for the second network node to obtain the first information may be reduced, thereby improving an efficiency of the second network node performing mobility management of the UE based on the first information of the UE.

In the embodiments of the present disclosure, the first network node sends the first information of the UE to the second network node, so that when the UE supporting dual connectivity is in a fast-moving scenario, the second network node may perform mobility management of the UE based on the first information of the UE, thereby improving a reliability of the mobility management of the UE.

It should be understood that the foregoing general description and the following detailed description are exemplary and explanatory only and are not restrictive of the embodiments of the present disclosure.

### BRIEF DESCRIPTION OF THE DRAWINGS

The accompanying drawings herein are incorporated in and constitute a part of the specification, illustrate embodiments consistent with the present disclosure, and serve to explain the principles of the embodiments of the present disclosure together with the description.
FIG 1 is a schematic diagram of a wireless communication system according to an embodiment of the present disclosure;
FIG 2 is a flowchart of an information transmission method according to an embodiment of the present disclosure;
FIG 3 is a flowchart of an information transmission method according to an embodiment of the present disclosure;
FIG 4 is a flowchart of an information transmission method according to an embodiment of the present disclosure;
FIG 5 is a flowchart of an information transmission method according to an embodiment of the present disclosure;
FIG 6 is a flowchart of an information transmission method according to an embodiment of the present disclosure;
FIG 7 is a flowchart of an information transmission method according to an embodiment of the present disclosure;
FIG 8 is a flowchart of an information transmission method according to an embodiment of the present disclosure;
FIG 9 is a flowchart of an information transmission method according to an embodiment of the present disclosure;
FIG 10 is a block diagram of an information transmission apparatus according to an embodiment of the present disclosure;
FIG 11 is a block diagram of an information transmission apparatus according to an embodiment of the present disclosure;
FIG 12 is a block diagram of an information transmission apparatus according to an embodiment of the present disclosure;
FIG 13 is a block diagram of an information transmission apparatus according to an embodiment of the present disclosure;
FIG 14 is a block diagram of an information transmission apparatus according to an embodiment of the present disclosure;
FIG 15 is a block diagram of an information transmission apparatus according to an embodiment of the present disclosure;
FIG 16 is a block diagram of a UE according to an embodiment of the present disclosure;
FIG 17 is a block diagram of a communication device according to an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terms used in the embodiments of the present disclosure are solely for the purpose of describing a particular embodiment and are not intended to limit the embodiments of the present disclosure. The terms "a" and "the" in the singular form used in the embodiments and claims of the disclosure are also intended to include the plural form, unless the context clearly indicates other meaning. It should also be understood that the term "and/or" as used herein refers to any or all possible combinations of one or more associated listed items.

It should be understood that although the terms first, second, third, etc. may be used to describe various information in the embodiments of the present disclosure, such information should not be limited to these terms. These terms are used only to distinguish information in the same type from one another. For example, without leaving the scope of this embodiments of the present disclosure, the first message may also be referred to as the second information, and likewise the second information may be referred to as the first message. Depending on the context, the words "if" and "in a case" used here may be interpreted as "when" or "in response to determining".

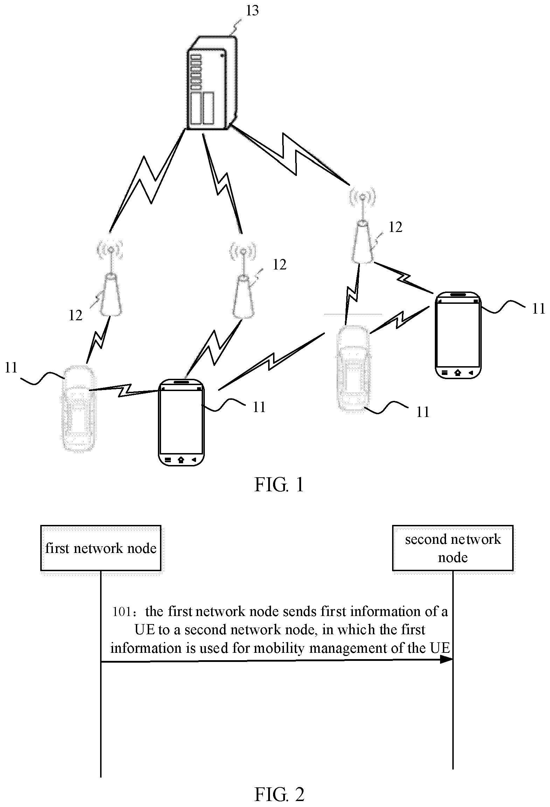

Please refer to FIG 1, which is a schematic diagram of a wireless communication system according to an embodiment of the present disclosure. As illustrated in FIG 1, the wireless communication system is a communication system based on the cellular mobile communication technology, and the wireless communication system may include at least one UE 11, and at least two access network devices 12.

The UE 11 may be a device that provides voice and/or data connectivity to users. The UE 11 may communicate with one or more core networks via a radio access network (RAN), and the UE can be connected to devices of an external network such as Internet and other UEs. The UE 11 may be an Internet of Things (IoT) UE, such as a sensor device, a mobile phone (or a "cellular" phone), and a computer with an IoT UE. For example, it may be a fixed, portable, pocket-sized, handheld, computer-built-in or vehicle-mounted device. For example, it may be a station (STA), a subscriber unit, a subscriber station, a mobile station, a mobile, a remote station, an access point, a remote UE (remote terminal), an access UE (access terminal), a user terminal, a user agent, a user device, or a user (user equipment, UE). Alternatively, the UE 11 may also be a device of an unmanned aerial vehicle (UAV). Alternatively, the UE 11 may also be a vehicle-mounted device, for example, it may be a driving computer with a wireless communication function, or a wireless communication device externally connected to the driving computer. Alternatively, the UE 11 may also be a roadside device, for example, a street lamp, a signal lamp or other roadside devices with a wireless communication function.

The access network device 12 may be a network side device in the wireless communication system. The wireless communication system may be a fourth-generation mobile communication (4G) system, also known as a long-term evolution (LTE) system; or, the wireless communication system may be a 5G system, also known as a new radio (NR) system or a 5G NR system. Alternatively, the wireless communication system may be a next generation system of the 5G system. The access network in the 5G system may be referred to as new generation-radio access network (NG-RAN). Alternatively, the wireless communication system may be a machine type communication (MTC) system.

The access network device 12 may be an evolved access device (eNB) adopted in the 4G system. Alternatively, the access network device 12 may also be an access device (gNB) adopting a centralized distributed architecture in the 5G system. When the access network device 12 adopts the centralized distributed architecture, it usually includes a central unit (CU) and at least two distributed units (DUs). The central unit is provided with a protocol stack including a packet data convergence protocol (PDCP) layer, a radio link layer control protocol (RLC) layer, and a media access control (MAC) layer; the distributed unit is provided with a protocol stack including a physical (PHY) layer. The specific implementation of the access network device 12 is not limited in the embodiments of the present disclosure.

A wireless connection may be established between the access network device 12 and the UE 11 through a wireless air interface. In different implementations, the wireless air interface is a wireless air interface based on a fourth generation mobile communication network technology (4G) standard; or, the wireless air interface is a wireless air interface based on a fifth generation mobile communication network technology (5G) standard, for example, the wireless air interface is a new radio interface; or, the wireless air interface may also be a wireless air interface based on a next generation mobile communication network technology standard of the 5G standard.

An E2E (End to End) or D2D (device to device) connection may be established between UEs 11, for example, in scenarios such as V2V (vehicle to vehicle) communication, V2I (vehicle to Infrastructure) communication and V2P (vehicle to pedestrian) communication in vehicle to everything (V2X) communication.

The access network device 12 may be located in a communication system integrated with a satellite communication system, and may provide connection service for a satellite, and may connect the satellite to the core network. For example, the access network device 12 may be an access network device having a satellite gateway function in the communication system, such as a gateway device, a ground station device, a non-terrestrial network gateway (NTN-Gateway)/satellite gateway, etc.

The wireless communication system may further include a core network device 13. The several access network devices 12 are connected to the core network device 13, respectively.

For example, the core network device 13 may be a mobility management entity (MME) in an evolved packet core (EPC) network. Alternatively, the core network device may also be an enhanced serving mobile location centre (E-SMLC) or the like.

For another example, the core network device 13 may be an access and mobility management function (AMF), a location management function (LMF), a gateway mobile location center (GMLC), etc. The implementation form of the core network device 13 is not limited in the embodiments of the present disclosure.

It should be noted that the network architecture shown in FIG 1 is only an example applicable to the embodiment of the present disclosure and does not constitute a limitation on the scope of application of the embodiments of the present disclosure.

In order to facilitate understanding of those skilled in the art, the embodiments of the present disclosure provide multiple implementations to clearly illustrate the technical solution of the embodiments of the present disclosure. Of course, those skilled in the art may understand that the multiple embodiments provided by the embodiments of the present disclosure may be implemented separately, or may be implemented together with the methods of other embodiments of the embodiments of the present disclosure, or may be implemented together with some methods in the related art separately or in combination, which is not limited in the embodiments of the present disclosure.

In a technical solution, the LTE UAV supports reporting of UE's altitude, speed and location information. The UE's altitude, speed and location information may be used to assist the network side in performing mobility configuration.

In order to perform mobility enhancement, in the LTE UAV, a UE may be requested to report a planned flight path (i.e., flight path configuration of the UE) to an eNB (evolved Node B) through a radio resource control (RRC) message. Then, the eNB may configure mobility such as handover for the UE according to the planned flight path reported by the UE. For example, according to the planned flight path, the eNB may know in advance which cell is suitable for accessing of the UE as a target cell of the UE. The UE flies according to a pre-configured flight path. When a position of the UAV approaches a cell edge of a serving cell, even before the UE reaches the cell edge of the serving cell, the serving eNB may start to perform handover preparations with a neighboring target eNB, for example, selecting a target eNB within a target eNB range of a next point of the flight path, forwarding terminal context in advance, and pre-configuring radio resources for the terminal in the target eNB, and then sending a handover command to the terminal under a high-quality radio link condition. In this way, when the UE performs handover on the flight path, a probability of handover failure is greatly reduced.

The NR UAV also supports reporting of the UE's altitude, speed and location information, and supports reporting of the flight path, similar to that in LET.

The related art only supports that the UAV UE sends relevant information (for example, altitude, speed, location, etc.) of the UAV UE to a current serving node (for example, base station) based on configuration information from the network side. Due to a rapid movement of the UAV UE, the UAV UE will frequently perform mobility operations, such as handover or RRC reestablishment. If a target node to which the UAV UE hands over or a newly reestablished node wants to obtain the relevant information of the UE, the target node or the newly reestablished node needs to request the UE to report the relevant information through RRC configuration information after accessing of the UE, which may increase a delay for the target node (or new node) to obtain the information of the UAV UE, and is not conducive for the target node (or new node) to configure an appropriate mobility configuration for the UE, or to prepare a suitable potential target cell.

In other technical solutions, for dual connectivity (DC), a terminal such as user equipment (UE) may establish connections in both two cell groups, such as a master cell group (MCG) and a secondary cell group (SCG). Considering that in subsequent versions, the UAV UE may also support dual connectivity, that is, the UAV UE may operate in the DC with a master node (MN) and a secondary node (SN). A cell associated with the MN belongs to the master cell group, and a cell associated with the SN belongs to the secondary cell group. Therefore, for the UAV UE supporting the dual connectivity, mobility enhancement also needs to be studied in a process of adding, modifying or changing the SCG (or MCG).

FIG 2 is a flowchart of an information transmission method according to an embodiment of the present disclosure. The information transmission method is performed by a first network node, as shown in FIG 2, the information transmission method may include the following steps.

At step 101, the first network node sends first information of a UE to a second network node, in which the first information is used for mobility management of the UE.

In some embodiments of the present disclosure, the first network node may be a base station, or any other network node capable of serving UEs in a communication system, such as a wireless apparatus or a machine type communication apparatus. For example, the first network node may be a gNB, an eNB, etc.

In some embodiments of the present disclosure, the second network node may be a base station, or any other network node capable of serving UEs in the communication system, such as a wireless apparatus or a machine type communication apparatus. For example, the second network node may be a gNB, an eNB, etc.

In some examples, the first network node and the second network node are different network nodes used for the UE to perform mobility operations, respectively; or, the first network node and the second network node are a master node and a secondary node in a dual connection of the UE, respectively.

In some examples, the first network node and the second network node use the same type of radio access technology (RAT). For example, both the first network node and the second network node use the 5G NR RAT.

In some examples, the first network node and the second network node use different types of radio access technologies. For example, the first network node uses the 4G LTE RAT, while the second network node uses the 5G NR RAT. For another example, the first network node uses the 5G NR RAT, while the second network node uses the 4G LTE RAT.

In some examples, the UE may be an aerial user equipment, in which the aerial user equipment refers to a communication terminal capable of performing aerial operations, for example, the UE may be a UAV UE. In other examples, the UE may also be a UE carried by a person riding an aircraft.

In some examples, the UAV UE may be located on a UAV and may be integrated into the UAV, for example, the UE may be capable of providing a data connection for controlling the UAV or communicating with the UAV.

In some examples, the UAV UE may be a payload of the UAV and perform functions separate from the UAV.

The UAV described above may include any type of unmanned aerial vehicles. For example, the UAV may be an unmanned fixed-wing aircraft, an unmanned airship, an unmanned helicopter or any other devices capable of flying and being remotely controlled.

In some examples, the first network node may send the first information of the UE to the second network node through an RRC transfer message, so that the second network node performs mobility management of the UE according to the first information of the UE.

In some examples, the mobility management of the UE may include: during a mobility operation of the UE (e.g., handover or RRC reestablishment or RRC resume), performing a mobility configuration for the UE. For example, the mobility configuration includes: allocation of time, frequency resources and/or serving cells for the UE.

In some examples, the first information of the UE is reported by the UE to the first network node. For example, the UE sends the first information of the UE to the first network node based on configuration information from the network side.

In the embodiments of the present disclosure, the first network node sends the first information of the UE to the second network node. In this way, in a scenario where the UE frequently performs mobility operations, compared to a solution that the second network node can obtain the first information of the UE only after accessing of the UE, a delay for the second network node to obtain the first information may be reduced, thereby improving an efficiency of the second network node performing the mobility management of the UE based on the first information of the UE.

In some examples, the mobility management of the UE may include: mobility management of the SCG for the UE, or mobility management of the MCG for the UE.

In some examples, the mobility management of the SCG may include: when the UE supports dual connectivity, a mobility configuration of the SCG for the UE. For example, the mobility configuration of the SCG includes: a mobility configuration of adding, modifying or changing the SCG for the UE. For example, the mobility configuration of the SCG includes: a mobility configuration of adding, modifying or changing an SN for the UE.

In some examples, the mobility management of the MCG may include: when the UE supports dual connectivity, a mobility configuration of the MCG for the UE. For example, the mobility configuration of the MCG includes: a mobility configuration of adding, modifying or changing the MCG for the UE. For example, the mobility configuration of the MCG includes: a mobility configuration of adding, modifying or changing an MN for the UE. Specifically, the mobility management of the MCG may include: mobility management in scenarios such as handover, RRC resume, and RRC reestablishment.

In the embodiments of the present disclosure, the first network node sends the first information of the UE to the second network node, so that when the UE supporting dual connectivity is in a fast-moving scenario, the second network node may perform mobility management of the UE based on the first information of the UE, thereby improving a reliability of the mobility management of the UE.

In an embodiment, the first information of the UE includes at least one of altitude information, speed information, location information, flight path information, or airborne status information of the UE.

In some examples, the altitude information of the UE is used to indicate a flight altitude of the UE.

For example, the flight altitude of the UE may be an altitude of the UE relative to the sea level, or may be an altitude of the UE relative to a base station.

In some examples, the speed information of the UE is used to indicate a flight speed of the UE.

For example, the flight speed may be a vertical speed, a horizontal speed, or a relative speed with respect to the ground.

In some examples, the location information of the UE is used to indicate a flight location of the UE.

For example, the location information of the UE may be location information in a three-dimensional space, and the location information of the UE may include latitude and longitude information on the ground, and may also include altitude information of the UE.

In some examples, the flight path information of the UE is used to indicate a flight path of the UE. For example, the flight path of the UE may be a flight path planned for the UE by a third-party system (e.g., drone management system) or a user.

For example, the flight path information may include locations that the UE's flight path passes through and/or timestamps when the UE arrives at these locations.

In some examples, the airborne status information is used to indicate whether the UE is in an aerial flight mode or a land stay mode.

For example, the airborne status information is a first specific value, used to indicate that the UE is in the aerial flight mode, and/or, the airborne status information is a second specific value, used to indicate that the UE is in the land stay mode. For example, the first specific value is "0" and the second specific value is "1".

In an embodiment, the first network node sending the first information of the UE to the second network node in the above step 101 includes at least one of the following:

the first network node sending the first information of the UE to the second network node during a process of the UE performing a mobility operation; or

the first network node sending the first information of the UE to the second network node in a case where the UE is in a DC scenario, i.e., during a process of the UE performing communication with the first network node and the second network node.

In some examples, the mobility operation is: handover, RRC reestablishment, or RRC resume.

In an embodiment, in a case that the mobility operation is handover, the first network node is a current serving node of the UE, and the second network node is a target node to be accessed by the UE.

In an embodiment, in a case that the mobility operation is RRC reestablishment or RRC resume, the first network node is a last serving node of the UE, and the second network node is a node to be accessed by the UE.

In the embodiments of the present disclosure, during the process of the UE performing handover or RRC reestablishment or RRC resume, the first network node sends the first information of the UE reported by the UE to the second network node. It can be noted that in this technical solution, the second network node is not required to access the UE, and the second network node may obtain the first information of the UE from the first network node that originally accessed the UE. In this way, compared with the second network node obtaining the first information of the UE only after the UE accesses the second network node, the delay for the second network node to obtain the first information of the UE may be reduced, so that the second network node may quickly configure the UE with an appropriate mobility configuration based on the first information of the UE, thereby improving the efficiency of the mobility management of the UE.

In an embodiment, sending the first information of the UE to the second network node during the process of the UE performing the mobility operation comprises at least one of the following:

sending the first information of the UE to the second network node through a handover request message during a handover process; or

sending the first information of the UE to the second network node through a retrieve UE context response message during an RRC reestablishment process or RRC resume process.

**In** some examples, the first information of the UE is included in handover preparation information; the handover preparation information is carried in the handover request message.

In some examples, the first information of the UE is carried as a kind of UE context information in the retrieve UE context response message sent by the first network node to the second network node.

In some examples, the handover may be a master node handover in a dual connection, the first network node is a source MN in the dual connection of the UE, and the second network node is a target MN in the dual connection of the UE.

The source MN in the dual connection may carry the first information of the UE in the handover request message and send the first information of the UE to the target MN in the dual connection.

In an embodiment, the first network node is a master node in a dual connectivity network, and the second network node is a secondary node in the dual connectivity network.

In this embodiment, after the master node in the dual connectivity network obtains the first information of the UE (for example, altitude information, speed information, location information, etc. of the UE) from the UE, the master node may send the first information of the UE to the secondary node in the dual connectivity network, so that the secondary node may perform mobility management of the SCG (for example, mobility configuration of the SCG) based on the first information of the UE, which may improve a reliability of the mobility management of the UE and improve a coverage capability.

**In** an embodiment, the first network node is a secondary node in the dual connectivity network, and the second network node is a master node in the dual connectivity network.

In this embodiment, after the secondary node in the dual connectivity network obtains the first information of the UE (for example, altitude information, speed information, location information, etc. of the UE) from the UE, the secondary node may send the first information of the UE to the master node in the dual connectivity network, so that the master node may perform mobility management of the MCG (for example, mobility configuration of the MCG) based on the first information of the UE, which may improve a reliability of the mobility management of the UE and improve a coverage capability. In an embodiment, the first information may be carried in an RRC transfer message sent by the secondary node to the master node.

**In** an embodiment, sending the first information of the UE to the second network node includes:
sending the first information of the UE to the second network node through a first message;
in which the first message includes at least one of:
a secondary node (S-node) addition request message;
an S-node modification request message;
an S-node modification confirm message;
an S-node change confirm message;
an S-node release request message; or
an RRC transfer message.

In some examples, the first information of the UE may be included in cell group configuration information (CG-ConfigInfo), and the cell group configuration information is carried in the first message.

**In** some examples, the first network node is a master node in the dual connectivity network, and the second network node may be a source SN (secondary node) in the dual connectivity network. The master node sends the first information of the UE (e.g., altitude information, speed information, location information, etc. of the UE) to the source SN in the dual connectivity network through the first message. The source SN may perform modification or configuration update for a source SCG according to the first information of the UE.

In some examples, the first network node is a master node in a dual connectivity network, and the second network node may be a target SN (secondary node) in the dual connectivity network. The master node sends the first information of the UE (e.g., the height information, speed information, location information, etc. of the UE) to the target SN in the dual connectivity network through the first message. The target SN may determine a target SCG or a target SCG configuration based on the first information of the UE.

In an embodiment, the first network node sending the first information of the UE to the second network node may include:
sending, to the second network node, first information most recently reported by the UE to the first network node.

The first information most recently reported by the UE may be understood as the first information reported by the UE that is last received by the first network node before a current time.

In this way, when the second network node performs mobility management of the UE based on the first information, the reliability of the mobility management of the UE may be improved.

In an embodiment, the method further includes:
sending a reception time at which the first network node receives the first information of the UE to the second network node.

In this embodiment, the first network node may carry the first information of the UE and the reception time at which the first network node receives the first information of the UE in the same message and send it to the second network node.

In this way, the second network node determines, based on the reception time at which the first network node receives the first information, whether to perform mobility management of the UE according to the first information, thereby improving the reliability of the mobility management of the UE.

In an embodiment, the first network node sending the first information of the UE to the second network node includes:
in a case that a difference between the reception time and a current time is less than or equal to a time threshold, sending the first information to the second network node.

Here, the time threshold may be a time value specified by a protocol or configured by the network side.

The reception time may be an absolute time, for example, UTC (Universal Coordinated Time).

In some examples, the first network node does not send the first information of the UE to the second network node if the difference between the reception time and the current time is greater than the time threshold.

In this way, the reliability of the second network node performing the mobility management of the UE based on the first information may be improved.

It can be understood that, in the embodiments, when the first network node sends the first information of the UE to the second network node, the first network node may actively send the first information of the UE to the second network node, of course, the first network node may also passively send the first information of the UE to the second network node. For example, the first network node sends the first information of the UE based on first indication information from the second network node.

In an embodiment, the method further includes:
receiving first indication information sent by the second network node, in which the first indication information instructs the first network node to send the first information to the second network node.

In some examples, the first indication information is carried in a retrieve UE context request message sent by the second network node to the first network node. The first indication information is used to indicate that the first network node needs to provide one or more of the first information of the UE. For example, this example may be applicable to the RRC reestablishment process or RRC resume process.

In some examples, the first indication information may be carried in a third message sent by the second network node to the first network node.

For example, the third message may include at least one of the following: a secondary node (S-NODE) addition required message, an S-NODE modification required message, or an S-NODE change required message. For example, this example may be applicable to a case that the first network node is an MN and the second network node is an SN, or a case that the first network node is an SN and the second network node is an MN.

In some examples, the first indication information may be included in cell group configuration information (CG-Config), and the cell group configuration information is carried in the third message sent by the second network node to the first network node. The first indication information is used to indicate that the first network node needs to provide one or more of the first information of the UE.

In some examples, if the first indication information indicates that the first network node provides the altitude information of the UE, the first network node may send the altitude information of the UE to the second network node.

For another example, if the first indication information indicates that the first network node provides the speed information and the altitude information of the UE, the first network node may send the speed information and the altitude information of the UE to the second network node.

The present disclosure provides an information transmission method, including:
receiving, by a first network node, first indication information sent by a second network node; in which the first indication information instructs the first network node to send first information of a UE to the second network node, and the first information is used for mobility management of the UE.

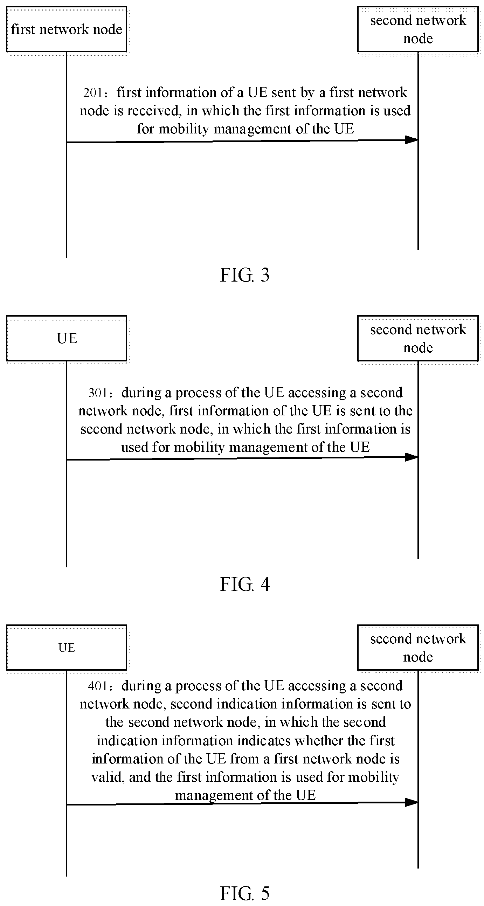

FIG 3 is a flowchart of an information transmission method according to an embodiment of the present disclosure. The information transmission method is performed by a second network node, as shown in FIG 3, the information transmission method may include the following steps.

At step 201, first information of a UE sent by a first network node is received, in which the first information is used for mobility management of the UE.

In some embodiments of the present disclosure, the first network node may be a base station, or any other network node capable of serving UEs in a communication system, such as a wireless apparatus or a machine type communication apparatus. For example, the first network node may be a gNB, an eNB, etc.

In some embodiments of the present disclosure, the second network node may be a base station, or any other network node capable of serving UEs in the communication system, such as a wireless apparatus or a machine type communication apparatus. For example, the second network node may be a gNB, an eNB, etc.

In some examples, the first network node and the second network node are different network nodes used for the UE to perform mobility operations, respectively; or, the first network node and the second network node are a master node and a secondary node in a dual connection of the UE, respectively.

In some examples, the first network node and the second network node use the same type of radio access technology (RAT). For example, both the first network node and the second network node use the 5G NR RAT.

In some examples, the first network node and the second network node use different types of radio access technologies. For example, the first network node uses the 4G LTE RAT, while the second network node uses the 5G NR RAT. For another example, the first network node uses the 5G NR RAT, while the second network node uses the 4G LTE RAT.

In some examples, the UE may be an aerial user equipment, in which the aerial user equipment refers to a communication terminal capable of performing aerial operations, for example, the UE may be a UAV UE. In other examples, the UE may also be a UE carried by a person riding an aircraft.

In some examples, the UAV UE may be located on a UAV and may be integrated into the UAV, for example, the UE may be capable of providing a data connection for controlling the UAV or communicating with the UAV.

In some examples, the UAV UE may be a payload of the UAV and perform functions separate from the UAV.

The UAV described above may include any type of unmanned aerial vehicles. For example, the UAV may be an unmanned fixed-wing aircraft, an unmanned airship, an unmanned helicopter or any other devices capable of flying and being remotely controlled.

In some examples, the second network node may receive the first information of the UE sent by the first network node through an RRC transfer message.

In some examples, the second network node performs mobility management of the UE according to the first information of the UE.

In some examples, the mobility management of the UE may include: during a mobility operation of the UE (e.g., handover or RRC reestablishment), performing a mobility configuration for the UE. For example, the mobility configuration includes: allocation of time, frequency resources and/or serving cells for the UE.

In some examples, the first information of the UE is reported by the UE to the first network node. For example, the UE sends the first information of the UE to the first network node based on configuration information from the network side.

In the embodiments of the present disclosure, the second network node receives the first information of the UE sent by the first network node. In this way, in a scenario where the UE frequently performs mobility operations, compared to a solution that the second network node can obtain the first information of the UE only after accessing of the UE, a delay for the second network node to obtain the first information may be reduced, thereby improving an efficiency of the second network node performing the mobility management of the UE based on the first information of the UE.

In some examples, the mobility management of the UE may include: mobility management of the SCG for the UE, or mobility management of the MCG for the UE.

In some examples, the mobility management of the SCG may include: when the UE supports dual connectivity, a mobility configuration of the SCG for the UE. For example, the mobility configuration of the SCG includes: a mobility configuration of adding, modifying or changing the SCG for the UE. For example, the mobility configuration of the SCG includes: a mobility configuration of adding, modifying or changing an SN for the UE.

In some examples, the mobility management of the MCG may include: when the UE supports dual connectivity, a mobility configuration of the MCG for the UE. For example, the mobility configuration of the MCG includes: a mobility configuration of adding, modifying or changing the MCG for the UE. For example, the mobility configuration of the MCG includes: a mobility configuration of adding, modifying or changing an MN for the UE. Specifically, the mobility management of the MCG may include: mobility management in scenarios such as handover, RRC resume, and RRC reestablishment.

In the embodiments of the present disclosure, the second network node receives the first information of the UE sent by the first network node, so that when the UE supporting dual connectivity is in a fast-moving scenario, the second network node may perform mobility management of the UE based on the first information of the UE, thereby improving a reliability of the mobility management of the UE.

In an embodiment, the first information of the UE includes at least one of altitude information, speed information, location information, flight path information, or airborne status information of the UE.

In some examples, the altitude information of the UE may include a flight altitude of the UE.

For example, the flight altitude of the UE may be an altitude of the UE relative to the sea level, or may be an altitude of the UE relative to a base station.

In some examples, the speed information of the UE is used to indicate a flight speed of the UE.

For example, the flight speed may be a vertical speed, a horizontal speed, or a relative speed with respect to the ground.

In some examples, the location information of the UE is used to indicate a flight location of the UE.

For example, the location information of the UE may be location information in a three-dimensional space, and the location information of the UE may include latitude and longitude information on the ground, and may also include altitude information of the UE.

In some examples, the flight path information of the UE is used to indicate a flight path of the UE. For example, the flight path of the UE may be a flight path planned for the UE by a third-party system (e.g., drone management system) or a user, or may be a flight path planned for the UE by a network side device (such as core network device).

For example, the flight path information may include locations that the UE's flight path passes through and/or timestamps when the UE arrives at these locations.

In some examples, the airborne status information is used to indicate whether the UE is in an aerial flight mode or a land stay mode.

For example, the airborne status information is a first specific value, used to indicate that the UE is in the aerial flight mode, and/or, the airborne status information is a second specific value, used to indicate that the UE is in the land stay mode.

In an embodiment, receiving the first information of the UE sent by the first network node in the above step 201 includes at least one of the following:
receiving the first information of the UE sent by the first network node during a process of the UE performing a mobility operation; or
receiving the first information of the UE sent by the first network node during a process of the UE performing communication with the first network node and the second network node in a dual connectivity network.

In some examples, the mobility operation is: handover, RRC reestablishment, or RRC resume.

In an embodiment, in a case that the mobility operation is handover, the first network node is a current serving node of the UE, and the second network node is a target node to be accessed by the UE.

Or, in a case that the mobility operation is RRC reestablishment or RRC resume, the first network node is a last serving node of the UE, and the second network node is a node to be accessed by the UE.

In the embodiments of the present disclosure, during the process of the UE performing handover or RRC reestablishment or RRC resume, the first network node sends the first information of the UE reported by the UE to the second network node. In this way, compared with the second network node obtaining the first information of the UE only after the UE accesses the second network node, the delay for the second network node to obtain the first information of the UE may be reduced, so that the second network node may quickly configure the UE with an appropriate mobility configuration based on the first information of the UE, thereby improving the efficiency of the mobility management of the UE.

In an embodiment, in a case that the mobility operation is handover, the first network node is a current serving node of the UE, and the second network node is a target node to be accessed by the UE.

Or, in a case that the mobility operation is RRC reestablishment or RRC resume, the first network node is a last serving node of the UE, and the second network node is a node to be accessed by the UE.

In the embodiments of the present disclosure, during the process of the UE performing handover or RRC reestablishment or RRC resume, the first network node sends the first information of the UE reported by the UE to the second network node. In this way, compared with the second network node obtaining the first information of the UE only after the UE accesses the second network node, the delay for the second network node to obtain the first information of the UE may be reduced, so that the second network node may quickly configure the UE with an appropriate mobility configuration based on the first information of the UE, thereby improving the efficiency of the mobility management of the UE.

In an embodiment, receiving the first information of the UE sent by the first network node during the process of the UE performing the mobility operation comprises at least one of the following:
receiving the first information of the UE sent by the first network node through a handover request message during a handover process; or
receiving the first information of the UE sent by the first network node through a retrieve UE context response message during an RRC reestablishment process or RRC resume process.

In some examples, the first information of the UE is included in handover preparation information; the handover preparation information is carried in the handover request message.

In some examples, the first information of the UE is carried as a kind of UE context information in the retrieve UE context response message sent by the first network node to the second network node.

In some examples, the handover may be a master node handover in a dual connection, the first network node is a source MN in the dual connection of the UE, and the second network node is a target MN in the dual connection of the UE.

The source MN in the dual connection may carry the first information of the UE in the handover request message and send the first information of the UE to the target MN in the dual connection.

In an embodiment, the first network node is a master node in a dual connectivity network, and the second network node is a secondary node in the dual connectivity network.

In this embodiment, after the master node in the dual connectivity network obtains the first information of the UE (for example, altitude information, speed information, location information, etc. of the UE) from the UE, the master node may send the first information of the UE to the secondary node in the dual connectivity network, so that the secondary node may perform mobility management of the SCG (for example, mobility configuration of the SCG) based on the first information of the UE, which may improve a reliability of the mobility management of the UE and improve a coverage capability.

In an embodiment, the first network node is a secondary node in the dual connectivity network, and the second network node is a master node in the dual connectivity network.

In this embodiment, after the secondary node in the dual connectivity network obtains the first information of the UE (for example, altitude information, speed information, location information, etc. of the UE) from the UE, the secondary node may send the first information of the UE to the master node in the dual connectivity network, so that the master node may perform mobility management of the MCG (for example, mobility configuration of the MCG) based on the first information of the UE, which may improve a reliability of the mobility management of the UE and improve a coverage capability.

In an embodiment, receiving the first information of the UE sent by the first network node includes:
receiving the first information of the UE sent by the first network node through a first message;
in which the first message includes at least one of:
a secondary node (S-node) addition request message;
an S-node modification request message;
an S-node modification confirm message;
an S-node change confirm message;
an S-node release request message; or
an RRC transfer message.

In some examples, the first information of the UE may be included in cell group configuration information (CG-ConfigInfo), and the cell group configuration information is carried in the first message.

In some examples, the first network node is a master node in the dual connectivity network, and the second network node may be a source SN (secondary node) in the dual connectivity network. The master node sends the first information of the UE (e.g., altitude information, speed information, location information, etc. of the UE) to the source SN in the dual connectivity network through the first message. The source SN may perform modification or configuration update for a source SCG according to the first information of the UE.

In some examples, the first network node is a master node in a dual connectivity network, and the second network node may be a target SN (secondary node) in the dual connectivity network. The master node sends the first information of the UE (e.g., the height information, speed information, location information, etc. of the UE) to the target SN in the dual connectivity network through the first message. The target SN may determine a target SCG or a target SCG configuration based on the first information of the UE.

In an embodiment, receiving the first information of the UE sent by the first network node may include:
receiving first information of the UE sent by the first network node and most recently reported by the UE to the first network node.

The first information most recently reported by the UE may be understood as the first information reported by the UE that is last received by the first network node before a current time.

In this way, when the second network node performs mobility management of the UE based on the first information, the reliability of the mobility management of the UE may be improved.

In an embodiment, the method further includes:
receiving a reception time at which the first network node receives the first information of the UE.

For example, the reception time may be an absolute time, for example, UTC.

In this embodiment, the first network node may carry the first information of the UE and the reception time at which the first network node receives the first information of the UE in the same message and send it to the second network node.

In this way, the second network node determines, based on the reception time at which the first network node receives the first information, whether to perform mobility management of the UE according to the first information, thereby improving the reliability of the mobility management of the UE.

It can be understood that, in the embodiments, the first information of the UE sent by the first network node and received by the second network node may be the first information of the UE actively sent by the first network node to the second network node, of course, may also be the first information of the UE passively sent by the first network node to the second network node. For example, the first network node sends the first information of the UE based on indication information from the second network node.

In an embodiment, the method further includes:
sending first indication information to the first network node, in which the first indication information instructs the first network node to send the first information to the second network node.

In some examples, the first indication information is carried in a retrieve UE context request message sent by the second network node to the first network node. The first indication information is used to indicate that the first network node needs to provide one or more of the first information of the UE. For example, this example may be applicable to the RRC reestablishment process or RRC resume process.

In some examples, the first indication information may be carried in a third message sent by the second network node to the first network node. The third message may include at least one of the following: a secondary node (S-NODE) addition required message, an S-NODE modification required message, or an S-NODE change required message. For example, this example may be applicable to a case that the first network node is an MN and the second network node is an SN, or a case that the first network node is an SN and the second network node is an MN.

In some examples, the first indication information may be included in cell group configuration information (CG-Config), and the cell group configuration information is carried in the third message sent by the second network node to the first network node. The first indication information is used to indicate that the first network node needs to provide one or more of the first information of the UE.

In some examples, if the first indication information indicates that the first network node provides the altitude information of the UE, the first network node may send the altitude information of the UE to the second network node.

For another example, if the first indication information indicates that the first network node provides the speed information and the altitude information of the UE, the first network node may send the speed information and the altitude information of the UE to the second network node.

In an embodiment, the method further includes:
receiving second indication information sent by the UE, in which the second indication information indicates whether the first information of the UE from the first network node is valid.

In this embodiment, the UE may learn, according to protocol agreements or UE implementation, that the first network node sends the first information of the UE to the second network node. For example, the first information of the UE is the first information most recently reported by the UE to the first network node.

The UE may determine whether the first information is valid based on the first information (for example, the UE's altitude, speed, location, or flight path) most recently reported to the first network node and at least one of the UE's current altitude, speed, location, flight path or airborne status. If valid, the UE may send second indication information indicating that the first information is valid to the second network node; or, if invalid, the UE may send second indication information indicating that the first information is invalid to the second network node.

In some examples, the UE may determine whether the first information is valid based on whether an altitude difference between the current altitude and the altitude information in the reported first information exceeds an altitude difference threshold. For example, if the altitude difference exceeds the altitude difference threshold, the first information is determined to be invalid, and the UE generates the second indication information indicating that the first information is invalid. If the altitude difference does not exceed the altitude difference threshold, the first information is determined to be valid, and the UE generates the second indication information indicating that the first information is valid.

It is understandable that the UE may perform a comprehensive comparison between one or more of the UE's current altitude, speed, location, flight path, or airborne status and one or more of the corresponding first information to determine whether the first information is valid.

In an embodiment, receiving the second indication information sent by the UE includes:
receiving the second indication information sent by the UE through a second message.

For example, the second message may be an RRC message. The second message includes but is not limited to at least one of the following:
an RRC reconfiguration complete (RRCReconfigurationComplete) message;
an RRC reestablishment complete (RRCReestablishmentComplete) message;
an RRC resume complete (RRCResumeComplete) message;
a UE assistance information (UEAssistanceInformation) message;
a UE information response (UEInformationResponse) message;
an uplink information transfer (ULInformationTransfer) message;
an uplink information transfer inter radio access technology (ULInformationTransferIRAT) message;
an uplink information transfer for multi-rate dual connectivity (ULInformationTransferMRDC) message;
a media access control-control element (MAC-CE) message; or
a physical layer message.

For example, the physical layer message may be, for example, downlink control information (DCI).

For example, during the handover process, the UE may send the second indication information (i.e., first information validity or invalidity indication) to a target node through the RRC reconfiguration complete message.

For example, during the reestablishment process, the UE may send the second indication information to a new node (a node corresponding to a cell for reestablishment) through the RRC reestablishment complete message.

For example, during the handover process, the UE may send the second indication information to a new node (a node corresponding to a cell for resume) through the RRC resume complete message.

The present disclosure provides an information transmission method, including:
sending, by a second network node, first indication information to a first network node; in which the first indication information instructs the first network node to send first information of a UE to the second network node, and the first information is used for mobility management of the UE.

FIG 4 is a flowchart of an information transmission method according to an embodiment of the present disclosure. The information transmission method is performed by a UE, as shown in FIG 4, the information transmission method may include the following steps.

At step 301, during a process of the UE accessing a second network node, first information of the UE is sent to the second network node, in which the first information is used for mobility management of the UE.

In the embodiments of the present disclosure, the UE may be an aerial user equipment, in which the aerial user equipment refers to a communication terminal capable of performing aerial operations, for example, the UE may be a UAV UE. In other examples, the UE may also be a UE carried by a person riding an aircraft.

In some examples, the UAV UE may be located on a UAV and may be integrated into the UAV, for example, the UE may be capable of providing a data connection for controlling the UAV or communicating with the UAV.

In some examples, the UAV UE may be a payload of the UAV and perform functions separate from the UAV.

The UAV described above may include any type of unmanned aerial vehicles. For example, the UAV may be an unmanned fixed-wing aircraft, an unmanned airship, an unmanned helicopter or any other devices capable of flying and being remotely controlled.

In some embodiments of the present disclosure, the second network node may be a base station, or any other network node capable of serving UEs in the communication system, such as a wireless apparatus or a machine type communication apparatus. For example, the second network node may be a gNB, an eNB, etc.

In some examples, the mobility management of the UE may include: during a mobility operation of the UE (e.g., handover or RRC reestablishment), performing a mobility configuration for the UE. For example, the mobility configuration includes: allocation of time, frequency resources and/or serving cells for the UE.

In the embodiments of the present disclosure, the UE may send the first information of the UE to the second network node during the process of the UE accessing the second network node. For example, the first information is carried in an RRC reconfiguration complete message, an RRC reestablishment complete message, and/or an RRC resume complete message sent by the UE to the second network node.

In the embodiments of the present disclosure, the UE sends the first information of the UE to the second network node during the process of the UE accessing the second network node. In this way, in a scenario where the UE frequently performs mobility operations, compared to a solution that the second network node can obtain the first information of the UE only after accessing of the UE, the UE may send the first information to the second network node in advance, so that a delay for the second network node to obtain the first information may be reduced, thereby improving an efficiency of the second network node performing the mobility management of the UE based on the first information of the UE.

In an embodiment, the first information sent by the UE is used to indicate at least one of the UE's current altitude information, speed information, location information, flight path information, or airborne status information.

In this way, the second network node may obtain the latest first information of the UE, so that a reliability of the second network node performing mobility management of the UE based on the first information of the UE may be improved.

In an embodiment, the first information of the UE includes at least one of altitude information, speed information, location information, flight path information, or airborne status information of the UE]

In some examples, the altitude information of the UE may include a flight altitude of the UE.

For example, the flight altitude of the UE may be an altitude of the UE relative to the sea level, or may be an altitude of the UE relative to a base station.

In some examples, the speed information of the UE is used to indicate a flight speed of the UE.

For example, the flight speed may be a vertical speed, a horizontal speed, or a relative speed with respect to the ground.

In some examples, the location information of the UE is used to indicate a flight location of the UE.

For example, the location information of the UE may be location information in a three-dimensional space, and the location information of the UE may include latitude and longitude information on the ground, and may also include altitude information of the UE.

In some examples, the flight path information of the UE is used to indicate a flight path of the UE. For example, the flight path of the UE may be a flight path planned for the UE by a third-party system (e.g., drone management system) or a user, or may be a flight path planned for the UE by a network side device (such as core network device).

For example, the flight path information may include locations that the UE's flight path passes through and/or timestamps when the UE arrives at these locations.

In some examples, the airborne status information is used to indicate whether the UE is in an aerial flight mode or a land stay mode.

For example, the airborne status information is a first specific value, used to indicate that the UE is in the aerial flight mode, and/or, the airborne status information is a second specific value, used to indicate that the UE is in the land stay mode. For example, the first specific value is "0" and the second specific value is "1".

In an embodiment, in a case that a mobility operation performed by the UE is handover, the first network node is a current serving node of the UE, and the second network node is a target node to be accessed by the UE.

Or, in a case that a mobility operation performed by the UE is RRC reestablishment or RRC resume, the first network node is a last serving node of the UE, and the second network node is a node to be accessed by the UE.

In the embodiments of the present disclosure, when the UE performs handover or completes RRC reestablishment or RRC resume, the UE sends the first information of the UE to the second network node. In this way, compared with the second network node obtaining the first information of the UE only after the UE accesses the second network node, the delay for the second network node to obtain the first information of the UE may be reduced, so that the second network node may quickly configure the UE with an appropriate mobility configuration based on the first information of the UE, thereby improving the efficiency of the mobility management of the UE.

In an embodiment, sending the first information of the UE to the second network node during the process of the UE accessing the second network node in the above step 301 includes:

sending the first information of the UE to the second network node through at least one of the following:
an RRC reconfiguration complete message;
an RRC reestablishment complete message;
an RRC resume complete message;
a UE assistance information message;
a UE information response message;
an uplink information transfer message;
an uplink information transfer inter radio access technology message;
an uplink information transfer for multi-rate dual connectivity message;
a media access control-control element (MAC-CE) message; or
a physical layer message.

For example, the physical layer message may be, for example, DCI.

For example, during the handover process, the UE may send the first information to a target node through the RRC reconfiguration complete message.

For example, during the reestablishment process, the UE may send the first information to a new node (a node corresponding to a cell for reestablishment) through the RRC reestablishment complete message.

For example, during the handover process, the UE may send the first information to a new node (a node corresponding to a cell for resume) through the RRC resume complete message.

In some other embodiments of the present disclosure, the UE may send the first information to the second network node during the process of accessing the second network node.

As shown in FIG 5, FIG 5 is a flowchart of an information transmission method according to an embodiment of the present disclosure. The information transmission method is performed by a UE, as shown in FIG 5, the information transmission method may include the following steps.

At step 401, during a process of the UE accessing a second network node, second indication information is sent to the second network node, in which the second indication information indicates whether the first information of the UE from a first network node is valid, and the first information is used for mobility management of the UE.

In the embodiments of the present disclosure, the UE may be an aerial user equipment, in which the aerial user equipment refers to a communication terminal capable of performing aerial operations, for example, the UE may be a UAV UE. In other examples, the UE may also be a UE carried by a person riding an aircraft.

In some examples, the UAV UE may be located on a UAV and may be integrated into the UAV, for example, the UE may be capable of providing a data connection for controlling the UAV or communicating with the UAV.

In some examples, the UAV UE may be a payload of the UAV and perform functions separate from the UAV.

The UAV described above may include any type of unmanned aerial vehicles. For example, the UAV may be an unmanned fixed-wing aircraft, an unmanned airship, an unmanned helicopter or any other devices capable of flying and being remotely controlled.

In some embodiments of the present disclosure, the first network node may be a base station, or any other network node capable of serving UEs in a communication system, such as a wireless apparatus or a machine type communication apparatus. For example, the first network node may be a gNB, an eNB, etc.

In some embodiments of the present disclosure, the second network node may be a base station, or any other network node capable of serving UEs in the communication system, such as a wireless apparatus or a machine type communication apparatus. For example, the second network node may be a gNB, an eNB, etc.

In some examples, the first network node and the second network node are different network nodes used for the UE to perform mobility operations, respectively; or, the first network node and the second network node are a master node and a secondary node in a dual connection of the UE, respectively.

In some examples, the first network node and the second network node use the same type of radio access technology (RAT). For example, both the first network node and the second network node use the 5G NR RAT.

In some examples, the first network node and the second network node use different types of radio access technologies. For example, the first network node uses the 4G LTE RAT, while the second network node uses the 5G NR RAT. For another example, the first network node uses the 5G NR RAT, while the second network node uses the 4G LTE RAT.

In some examples, the first network node may send the first information of the UE to the second network node through an RRC transfer message, so that the second network node performs mobility management of the UE according to the first information of the UE.

In some examples, the mobility management of the UE may include: during a mobility operation of the UE (e.g., handover or RRC reestablishment), performing a mobility configuration for the UE. For example, the mobility configuration includes: allocation of time, frequency resources and/or serving cells for the UE.

In some examples, the first information of the UE is reported by the UE to the first network node. For example, the UE sends the first information of the UE to the first network node based on configuration information from the network side.

In some examples, the first information from the first network node is first information most recently reported by the UE to the first network node.

In the embodiments of the present disclosure, the UE may access the second network node when the UE completes a mobility operation (for example, handover or RRC reestablishment).

In the embodiments of the present disclosure, the UE may send the second indication information to the second network node during a process of the UE performing a mobility operation. For example, the indication information is carried in an RRC reconfiguration complete message, an RRC reestablishment complete message and/or an RRC resume complete message sent by the UE to the second network node.

In the embodiments of the present disclosure, in a scenario where the UE frequently performs mobility operations, compared to a solution that the second network node can obtain the first information of the UE only after accessing of the UE, since the first information is sent by the first network node to the second network node before the UE accesses the second network node, a delay for the second network node to obtain the first information may be reduced, thereby improving an efficiency of the second network node performing the mobility management of the UE based on the first information of the UE.

In the embodiments of the present disclosure, the UE sends the second indication information to the second network node during the process of performing the mobility operation, in which the second indication information is used to indicate whether the first information of the UE from the first network node is valid, so that a reliability of the second network node performing mobility management of the UE based on the first information of the UE may be improved.

In an embodiment, the first information of the UE includes at least one of altitude information, speed information, location information, flight path information, or airborne status information of the UE.

In some examples, the altitude information of the UE may include a flight altitude of the UE.

For example, the flight altitude of the UE may be an altitude of the UE relative to the sea level, or may be an altitude of the UE relative to a base station.

In some examples, the speed information of the UE is used to indicate a flight speed of the UE.

For example, the flight speed may be a vertical speed, a horizontal speed, or a relative speed with respect to the ground.

In some examples, the location information of the UE is used to indicate a flight location of the UE.

For example, the location information of the UE may be location information in a three-dimensional space, and the location information of the UE may include latitude and longitude information on the ground, and may also include altitude information of the UE.

In some examples, the flight path information of the UE is used to indicate a flight path of the UE. For example, the flight path of the UE may be a flight path planned for the UE by a third-party system (e.g., drone management system) or a user, or may be a flight path planned for the UE by a network side device (such as core network device).

For example, the flight path information may include locations that the UE's flight path passes through and/or timestamps when the UE arrives at these locations.

In some examples, the airborne status information is used to indicate whether the UE is in an aerial flight mode or a land stay mode.

For example, the airborne status information is a first specific value, used to indicate that the UE is in the aerial flight mode, and/or, the airborne status information is a second specific value, used to indicate that the UE is in the land stay mode. For example, the first specific value is "0" and the second specific value is "1".

In an embodiment, in a case that the mobility operation performed by the UE is handover, the first network node is a current serving node of the UE, and the second network node is a target node to be accessed by the UE.

Or, in a case that the mobility operation performed by the UE is RRC reestablishment or RRC resume, the first network node is a last serving node of the UE, and the second network node is a node to be accessed by the UE.

In the embodiments of the present disclosure, during the process of the UE performing handover or RRC reestablishment or RRC resume, the first information of the UE is sent to the second network node via the first network node. In this way, compared with the second network node obtaining the first information of the UE only after the UE accesses the second network node, the delay for the second network node to obtain the first information of the UE may be reduced, so that the second network node may quickly configure the UE with an appropriate mobility configuration based on the first information of the UE, thereby improving the efficiency of the mobility management of the UE.

In an embodiment, sending the second indication information to the second network node during the process of the UE accessing the second network node in the above step 401 includes:

sending the second indication information to the second network node through at least one of the following:
an RRC reconfiguration complete message;
an RRC reestablishment complete message;
an RRC resume complete message;
a UE assistance information message;
a UE information response message;
an uplink information transfer message;
an uplink information transfer inter radio access technology message;
an uplink information transfer for multi-rate dual connectivity message;
a MAC-CE message; or
a physical layer message.

For example, the physical layer message may be, for example, DCI.

For example, during the handover process, the UE may send the second indication information (i.e., validity or invalidity indication for the first information) to a target node through the RRC reconfiguration complete message.

For example, during the reestablishment process, the UE may send the validity or invalidity indication for the first information to a new node (a node corresponding to a cell for reestablishment) through the RRC reestablishment complete message.

For example, during the handover process, the UE may send the validity or invalidity indication for the first information to a new node (a node corresponding to a cell for resume) through the RRC resume complete message.

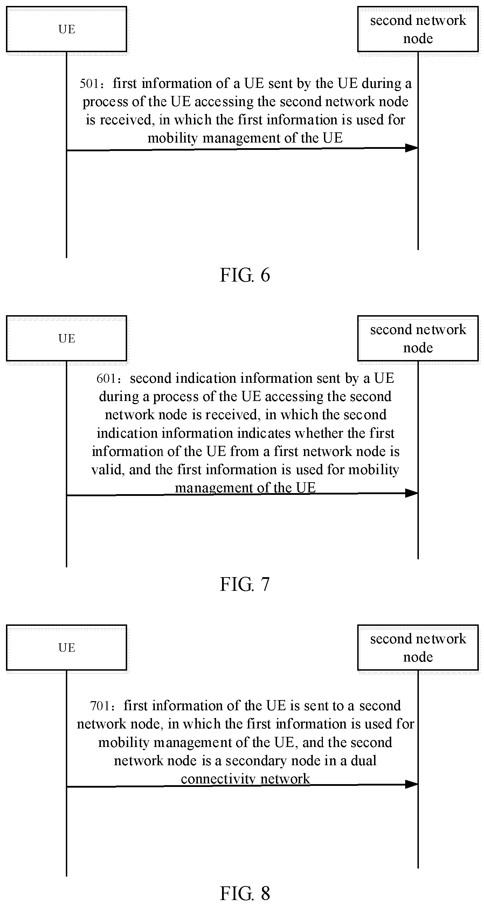

FIG 6 is a flowchart of an information transmission method according to an embodiment of the present disclosure. The information transmission method is performed by a second network node, as shown in FIG 6, the information transmission method may include the following steps.

At step 501, first information of a UE sent by the UE during a process of the UE accessing the second network node is received, in which the first information is used for mobility management of the UE.

In the embodiments of the present disclosure, the UE may be an aerial user equipment, in which the aerial user equipment refers to a communication terminal capable of performing aerial operations, for example, the UE may be a UAV UE. In other examples, the UE may also be a UE carried by a person riding an aircraft.

In some examples, the UAV UE may be located on a UAV and may be integrated into the UAV, for example, the UE may be capable of providing a data connection for controlling the UAV or communicating with the UAV.

In some examples, the UAV UE may be a payload of the UAV and perform functions separate from the UAV.

The UAV described above may include any type of unmanned aerial vehicles. For example, the UAV may be an unmanned fixed-wing aircraft, an unmanned airship, an unmanned helicopter or any other devices capable of flying and being remotely controlled.

In some embodiments of the present disclosure, the second network node may be a base station, or any other network node capable of serving UEs in the communication system, such as a wireless apparatus or a machine type communication apparatus. For example, the second network node may be a gNB, an eNB, etc.

In some examples, mobility management of the UE may include: during a mobility operation of the UE (e.g., handover or RRC reestablishment), performing a mobility configuration for the UE. For example, the mobility configuration includes: allocation of time, frequency resources and/or serving cells for the UE.

In the embodiments of the present disclosure, the second network node may receive the first information sent by the UE during the process of the UE accessing the second network node. For example, the first information is carried in an RRC reconfiguration complete message, an RRC reestablishment complete message and/or an RRC resume complete message sent by the UE to the second network node.

In the embodiments of the present disclosure, the UE sends the first information of the UE to the second network node during the process of the UE accessing the second network node, so that in a scenario where the UE frequently performs mobility operations, compared to a solution that the second network node can obtain the first information of the UE only after accessing of the UE, a delay for the second network node to obtain the first information may be reduced, thereby improving an efficiency of the second network node performing the mobility management of the UE based on the first information of the UE.

In an embodiment, the first information sent by UE is used to indicate at least one of the UE's current altitude information, speed information, location information, flight path information, or airborne status information.

In this way, the second network node may obtain the latest first information of the UE, so that a reliability of the second network node performing mobility management of the UE based on the first information of the UE may be improved.

In an embodiment, the first information of the UE includes at least one of altitude information, speed information, location information, flight path information, or airborne status information of the UE.

In an embodiment, receiving the first information of the UE sent by the UE during the process of the UE accessing the second network node includes:

receiving the first information of the UE sent by the UE through at least one of the following:
an RRC reconfiguration complete message;
an RRC reestablishment complete message;
an RRC resume complete message;
a UE assistance information message;
a UE information response message;
an uplink information transfer message;
an uplink information transfer inter radio access technology message;
an uplink information transfer for multi-rate dual connectivity message;
a MAC-CE message; or
a physical layer message.

For example, the physical layer message may be, for example, DCI.

For example, during the handover process, a target node may be configured as the second network node to receive the first information sent by the UE through the RRC reconfiguration complete message.

For example, during the reestablishment process, a new node (a node corresponding to a cell for reestablishment) may be configured as the second network node to receive the first information sent by the UE through the RRC reestablishment complete message.

For example, during the handover process, a new node (a node corresponding to a cell for resume) may be configured as the second network node to receive the first information sent by the UE through the RRC resume complete message.

FIG 7 is a flowchart of an information transmission method according to an embodiment of the present disclosure. The information transmission method is performed by a second network node, as shown in FIG 7, the information transmission method may include the following steps.

At step 601, second indication information sent by a UE during a process of the UE accessing the second network node is received, in which the second indication information indicates whether the first information of the UE from a first network node is valid, and the first information is used for mobility management of the UE.

In the embodiments of the present disclosure, the UE may be an aerial user equipment, in which the aerial user equipment refers to a communication terminal capable of performing aerial operations, for example, the UE may be a UAV UE. In other examples, the UE may also be a UE carried by a person riding an aircraft.

In some examples, the UAV UE may be located on a UAV and may be integrated into the UAV, for example, the UE may be capable of providing a data connection for controlling the UAV or communicating with the UAV.

In some examples, the UAV UE may be a payload of the UAV and perform functions separate from the UAV.

The UAV described above may include any type of unmanned aerial vehicles. For example, the UAV may be an unmanned fixed-wing aircraft, an unmanned airship, an unmanned helicopter or any other devices capable of flying and being remotely controlled.

In some embodiments of the present disclosure, the first network node may be a base station, or any other network node capable of serving UEs in a communication system, such as a wireless apparatus or a machine type communication apparatus. For example, the second network node may be a gNB, an eNB, etc.

In some embodiments of the present disclosure, the second network node may be a base station, or any other network node capable of serving UEs in the communication system, such as a wireless apparatus or a machine type communication apparatus. For example, the second network node may be a gNB, an eNB, etc.

In some examples, the first network node and the second network node are different network nodes used for the UE to perform mobility operations, respectively; or, the first network node and the second network node are a master node and a secondary node in a dual connection of the UE, respectively.

In some examples, the first network node and the second network node use the same type of radio access technology (RAT). For example, both the first network node and the second network node use the 5G NR RAT.

In some examples, the first network node and the second network node use different types of radio access technologies. For example, the first network node uses the 4G LTE RAT, while the second network node uses the 5G NR RAT. For another example, the first network node uses the 5G NR RAT, while the second network node uses the 4G LTE RAT.

In some examples, the first network node may send the first information of the UE to the second network node through an RRC transfer message, so that the second network node performs mobility management of the UE according to the first information of the UE.

In some examples, the mobility management of the UE may include: during a mobility operation of the UE (e.g., handover or RRC reestablishment), performing a mobility configuration for the UE. For example, the mobility configuration includes: allocation of time, frequency resources and/or serving cells for the UE.

In some examples, the first information of the UE is reported by the UE to the first network node. For example, the UE sends the first information of the UE to the first network node based on configuration information from the network side.

In the embodiments of the present disclosure, the second network node may receive the second indication information sent by the UE during the process of the UE accessing the second network node. For example, the second indication information is carried in an RRC reconfiguration complete message, an RRC reestablishment complete message and/or an RRC resume complete message sent by the UE to the second network node.

In the embodiments of the present disclosure, the second network node receives the first information of the UE sent by the UE during the process of the UE accessing the second network node, so that in a scenario where the UE frequently performs mobility operations, compared to a solution that the second network node can obtain the first information of the UE only after accessing of the UE, a delay for the second network node to obtain the first information may be reduced, thereby improving an efficiency of the second network node performing the mobility management of the UE based on the first information of the UE.

In the embodiments of the present disclosure, in a scenario where the UE frequently performs mobility operations, compared to a solution that the second network node can obtain the first information of the UE only after accessing of the UE, since the first information is sent by the first network node to the second network node before the UE accesses the second network node, a delay for the second network node to obtain the first information may be reduced, thereby improving an efficiency of the second network node performing the mobility management of the UE based on the first information of the UE.

In addition, the UE sends the second indication information to the second network node during the process of accessing the second network node, in which the indication information is used to indicate whether the first information of the UE from the first network node is valid, so that a reliability of the second network node performing mobility management of the UE based on the first information of the UE may be improved.

In an embodiment, the first information of the UE includes at least one of altitude information, speed information, location information, flight path information, or airborne status information of the UE.

In some examples, the altitude information of the UE may include a flight altitude of the UE.

For example, the flight altitude of the UE may be an altitude of the UE relative to the sea level, or may be an altitude of the UE relative to a base station.

In some examples, the speed information of the UE is used to indicate a flight speed of the UE.

The location information of the UE is used to indicate a flight location of the UE.

For example, the flight speed may be a vertical speed, a horizontal speed, or a relative speed with respect to the ground.

In some examples, the flight path information of the UE is used to indicate a flight path of the UE. For example, the flight path of the UE may be a flight path planned for the UE by a third-party system (e.g., drone management system) or a user, or may be a flight path planned for the UE by a network side device (such as core network device).

For example, the flight path information may include locations that the UE's flight path passes through and/or timestamps when the UE arrives at these locations.

In some examples, the airborne status information is used to indicate whether the UE is in an aerial flight mode or a land stay mode.

For example, the airborne status information is a first specific value, used to indicate that the UE is in the aerial flight mode, and/or, the airborne status information is a second specific value, used to indicate that the UE is in the land stay mode. For example, the first specific value is "0" and the second specific value is "1".

In an embodiment, in a case that the mobility operation performed by the UE is handover, the first network node is a current serving node of the UE, and the second network node is a target node to be accessed by the UE.

Or, in a case that the mobility operation performed by the UE is RRC reestablishment or RRC resume, the first network node is a last serving node of the UE, and the second network node is a node to be accessed by the UE.

In the embodiments of the present disclosure, during the process of the UE performing handover or RRC reestablishment or RRC resume, the first information of the UE is sent to the second network node via the first network node. In this way, compared with the second network node obtaining the first information of the UE only after the UE accesses the second network node, the delay for the second network node to obtain the first information of the UE may be reduced, so that the second network node may quickly configure the UE with an appropriate mobility configuration based on the first information of the UE, thereby improving the efficiency of the mobility management of the UE.

In an embodiment, receiving the second indication information sent by the UE during the process of the UE accessing the second network node in the above step 601 includes:
receiving the second indication information sent by the UE through at least one of the following:
an RRC reconfiguration complete message;
an RRC reestablishment complete message;
an RRC resume complete message;
a UE assistance information message;
a UE information response message;
an uplink information transfer message;
an uplink information transfer inter radio access technology message;
an uplink information transfer for multi-rate dual connectivity message;
a MAC-CE message; or
a physical layer message.

For example, the physical layer message may be, for example, DCI.

For example, during the handover process, a target node may be configured as the second network node to receive the second indication information (i.e., first information validity or invalidity indication) sent by the UE through the RRC reconfiguration complete message.

For example, during the reestablishment process, a new node (a node corresponding to a cell for reestablishment) may be configured as the second network node to receive the first information validity or invalidity indication sent by the UE through the RRC reestablishment complete message.

For example, during the handover process, a new node (a node corresponding to a cell for resume) may be configured as the second network node to receive the first information validity or invalidity indication sent by the UE through the RRC resume complete message.

In some other embodiments of the present disclosure, when the UE accesses the first network node (master node) and the second network node (secondary node) in a way of multi-connectivity (such as dual connectivity), the UE may send the first information to the second network node as the secondary node.

FIG 8 is a flowchart of an information transmission method according to an embodiment of the present disclosure. The information transmission method is performed by a UE, as shown in FIG 8, the information transmission method may include the following steps.

At step 701, first information of the UE is sent to a second network node, in which the first information is used for mobility management of the UE, and the second network node is a secondary node in a dual connectivity network.

In some embodiments of the present disclosure, the second network node may be a base station, or any other network node capable of serving UEs in the communication system, such as a wireless apparatus or a machine type communication apparatus. The base station may be a gNB, an eNB, etc.

In the embodiments of the present disclosure, the UE may be an aerial user equipment, in which the aerial user equipment refers to a communication terminal capable of performing aerial operations, for example, the UE may be a UAV UE. In other examples, the UE may also be a UE carried by a person riding an aircraft.

In some examples, the UAV UE may be located on a UAV and may be integrated into the UAV, for example, the UE may be capable of providing a data connection for controlling the UAV or communicating with the UAV.

In some examples, the UAV UE may be a payload of the UAV and perform functions separate from the UAV.

The UAV described above may include any type of unmanned aerial vehicles. For example, the UAV may be an unmanned fixed-wing aircraft, an unmanned airship, an unmanned helicopter or any other devices capable of flying and being remotely controlled.

In some examples, the second network node may receive the first information of the UE sent by the UE through an RRC transfer message.

In some examples, the second network node may receive the first information of the UE sent by the UE through a MAC message.

In some examples, the second network node may receive the first information of the UE sent by the UE through a physical layer message.

In some examples, the second network node performs mobility management of the UE according to the first information of the UE.

In some examples, the mobility management of the UE may include: mobility management of an SCG for the UE.

In some examples, the mobility management of the SCG may include: when the UE supports dual connectivity, a mobility configuration of the SCG for the UE. For example, the mobility configuration of the SCG includes: a mobility configuration of adding, modifying or changing the SCG for the UE. For example, the mobility configuration of the SCG includes: a mobility configuration of adding, modifying or changing an SN for the UE.

In the embodiments of the present disclosure, the second network node receives the first information of the UE sent by the UE, so that when the UE supporting dual connectivity is in a fast-moving scenario, the second network node may perform mobility management of the SCG for the UE based on the first information of the UE, thereby improving a reliability of the mobility management of the UE.

In an embodiment, the first information of the UE includes at least one of altitude information, speed information, location information, flight path information, or airborne status information of the UE.

In some examples, the altitude information of the UE may include a flight altitude of the UE.

For example, the flight altitude of the UE may be an altitude of the UE relative to the sea level, or may be an altitude of the UE relative to a base station.

In some examples, the speed information of the UE is used to indicate a flight speed of the UE.

For example, the flight speed may be a vertical speed, a horizontal speed, or a relative speed with respect to the ground.

In some examples, the location information of the UE is used to indicate a flight location of the UE.

For example, the location information of the UE may be location information in a three-dimensional space, and the location information of the UE may include latitude and longitude information on the ground, and may also include altitude information of the UE.

In some examples, the flight path information of the UE is used to indicate a flight path of the UE. For example, the flight path of the UE may be a flight path planned for the UE by a third-party system (e.g., drone management system) or a user, or may be a flight path planned for the UE by a network side device (such as core network device).

For example, the flight path information may include locations that the UE's flight path passes through and/or timestamps when the UE arrives at these locations.

In some examples, the airborne status information is used to indicate whether the UE is in an aerial flight mode or a land stay mode.

For example, the airborne status information is a first specific value, used to indicate that the UE is in the aerial flight mode, and/or, the airborne status information is a second specific value, used to indicate that the UE is in the land stay mode. For example, the first specific value is "0" and the second specific value is "1".

In an embodiment, the method further includes:
receiving request information related to the second network node and sent by the second network node, in which the request information instructs the UE to send the first information.

In some examples, the request information may be secondary cell group configuration request information.

For example, the request information may be sent by the second network node through a signaling radio bearer (SRB)3, a separate SRB 1 or a separate SRB2 to the UE.

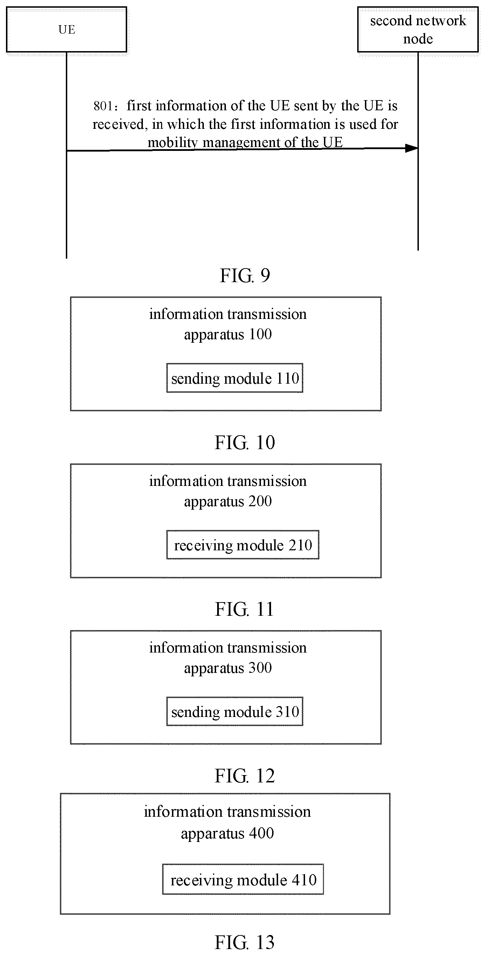

FIG 9 is a flowchart of an information transmission method according to an embodiment of the present disclosure. The information transmission method is performed by a second network node and the second network node is a secondary node in a dual connectivity network, as shown in FIG 9, the information transmission method may include the following steps.

At step 801, first information of the UE sent by the UE is received, in which the first information is used for mobility management of the UE.

In some embodiments of the present disclosure, the second network node may be a base station, or any other network node capable of serving UEs in the communication system, such as a wireless apparatus or a machine type communication apparatus. The base station may be a gNB, an eNB, etc.

In the embodiments of the present disclosure, the UE may be an aerial user equipment, in which the aerial user equipment refers to a communication terminal capable of performing aerial operations, for example, the UE may be a UAV UE. In other examples, the UE may also be a UE carried by a person riding an aircraft.

In some examples, the UAV UE may be located on a UAV and may be integrated into the UAV, for example, the UE may be capable of providing a data connection for controlling the UAV or communicating with the UAV.

In some examples, the UAV UE may be a payload of the UAV and perform functions separate from the UAV.

The UAV described above may include any type of unmanned aerial vehicles. For example, the UAV may be an unmanned fixed-wing aircraft, an unmanned airship, an unmanned helicopter or any other devices capable of flying and being remotely controlled.

In some examples, the second network node may receive the first information of the UE sent by the UE through an RRC message.

In some examples, the second network node may receive the first information of the UE sent by the UE through a MAC message.

In some examples, the second network node may receive the first information of the UE sent by the UE through a physical layer message.

In some examples, the second network node performs mobility management of the UE according to the first information of the UE.

In some examples, the mobility management of the UE may include: mobility management of an SCG for the UE, or mobility management of an MCG for the UE.

In some examples, the mobility management of the SCG may include: when the UE supports dual connectivity, a mobility configuration of the SCG for the UE. For example, the mobility configuration of the SCG includes: a mobility configuration of adding, modifying or changing the SCG for the UE. For example, the mobility configuration of the SCG includes: a mobility configuration of adding, modifying or changing an SN for the UE.

In the embodiments of the present disclosure, the second network node receives the first information of the UE sent by the UE, so that when the UE supporting dual connectivity is in a fast-moving scenario, the second network node may perform mobility management of the SCG for the UE based on the first information of the UE, thereby improving a reliability of the mobility management of the UE.

In an embodiment, the first information of the UE includes at least one of altitude information, speed information, location information, flight path information, or airborne status information of the UE.

In some examples, the altitude information of the UE may include a flight altitude of the UE.

For example, the flight altitude of the UE may be an altitude of the UE relative to the sea level, or may be an altitude of the UE relative to a base station.

In some examples, the speed information of the UE is used to indicate a flight speed of the UE.

For example, the flight speed may be a vertical speed, a horizontal speed, or a relative speed with respect to the ground.

In some examples, the location information of the UE is used to indicate a flight location of the UE.

For example, the location information of the UE may be location information in a three-dimensional space, and the location information of the UE may include latitude and longitude information on the ground, and may also include altitude information of the UE.

In some examples, the flight path information of the UE is used to indicate a flight path of the UE. For example, the flight path of the UE may be a flight path planned for the UE by a third-party system (e.g., drone management system) or a user, or may be a flight path planned for the UE by a network side device (such as core network device).

For example, the flight path information may include locations that the UE's flight path passes through and/or timestamps when the UE arrives at these locations.

In some examples, the airborne status information is used to indicate whether the UE is in an aerial flight mode or a land stay mode.

For example, the airborne status information is a first specific value, used to indicate that the UE is in the aerial flight mode, and/or, the airborne status information is a second specific value, used to indicate that the UE is in the land stay mode. For example, the first specific value is "0" and the second specific value is "1".

In an embodiment, the method further includes:
sending request information related to the second network node to the UE, in which the request information instructs the UE to send the first information.

In some examples, the request information may be secondary cell group configuration request information.

For example, the request information may be sent by the second network node through an SRB3, a separate SRB 1 or a separate SRB2 to the UE.

In an embodiment, the method further includes:
sending the first information of the UE to a first network node, in which the first network node is a master node in the dual connectivity network.

In some examples, the first network node and the second network node use the same type of radio access technology (RAT). For example, both the first network node and the second network node use the 5G NR RAT.

In some examples, the first network node and the second network node use different types of radio access technologies. For example, the first network node uses the 4G LTE RAT, while the second network node uses the 5G NR RAT.

In some examples, the first information of the UE is used for the first network node to perform mobility management of the MCG

In some examples, the mobility management of the MCG may include: when the UE supports dual connectivity, a mobility configuration of the MCG for the UE. For example, the mobility configuration of the MCG includes: a mobility configuration of adding, modifying or changing the MCG for the UE. For example, the mobility configuration of the MCG includes: a mobility configuration of adding, modifying or changing an MN for the UE. Specifically, the mobility management of the MCG may include: mobility management in scenarios such as handover, RRC resume, and RRC reestablishment.

In the embodiments of the present disclosure, the second network node sends the first information of the UE to the first network node, so that when the UE supporting dual connectivity is in a fast-moving scenario, the first network node may perform mobility management of the UE based on the first information of the UE, thereby improving a reliability of the first network node performing the mobility management of the UE based on the first information of the UE.

The technical solution provided in the embodiments of the present disclosure is described below in conjunction with specific application scenarios. It can be understood that the application scenarios here are only for clearly illustrating the technical solution provided in the embodiments of the present disclosure, and do not constitute a limitation on the application scenarios of the technical solution provided in the embodiments of the present disclosure.

### Scenario 1: Single connectivity scenario

In some embodiments, during the process of a UE perform handover of a network node, a first network node sends first information of the UE to a second network node, in which the first network node is a current serving node of the UE (or referred to as a source node, an old node), and the second network node is a target node to be accessed by the UE (or referred to as a new node). The first information of the UE includes: at least one of altitude information, speed information, location information, flight path information, or airborne status information of the UE. In some examples, the first network node sends a handover request message to the second network node, and the handover request message may carry the first information. For example, handover preparation information in the handover request message includes the first message.

In some other embodiments, during an RRC reestablishment process or RRC resume process, the first network node sends the first information to the second network node, in which the first network node is a last serving node of the UE, and the second network node is a target node (or new node) that the UE is to access. In an example, the first information may be carried in a retrieve UE context response message.

Optionally, before the first network node sends the first information to the second network node, the second network node may send first indication information to the first network node. The first indication information is used to indicate that the first network node needs to provide one or more of the first information of the UE. For example, the first indication information is included in a retrieve UE context request message.

Optionally, after the first network node sends the first information to the second network node during the process of the UE performing a mobility operation, the UE may also send second indication information to the second network node during the process of accessing the second network node, and the second indication information is used to indicate validity of the first information. For example, the second indication information may be carried in any of the following messages: an RRC reconfiguration complete message, an RRC reestablishment complete message, or an RRC resume complete message. It should be noted that the UE sending messages such as the RRC reconfiguration complete message, the RRC reestablishment complete message, and the RRC resume complete message is a step in the process of the UE accessing the second network node.

After receiving the first information of the UE, the second network node may prepare, according to the first information of the UE, in advance for accessing of the UE, for example, configuring radio resources for the UE in advance.

It should be noted that for other contents involved in each embodiment of this scenario, reference may be made to the description of relevant contents in the previous embodiments, which will not be repeated here.

It can be seen from the above that when the UE has not accessed the second network node, the first network node that originally accessed the UE may send the first information of the UE to the second network node. In this way, a success rate of the UE handing over to the second network node may be improved, which is beneficial to reduce a delay of the UE accessing the second network node and improve an efficiency of the UE handing over to the second network node.

In some other embodiments, for a single connectivity scenario of handover, RRC resume or RRC reestablishment, the UE may send the first information of the UE to the second network node during the processing of the UE performing a mobility operation. For example, the first information may be carried in any of the following messages: an RRC reconfiguration complete message, an RRC reestablishment complete message, or an RRC resume complete message.

Optionally, during the process of the UE accessing the second network node, the second indication information may also be sent to the second network node, in which the second indication information is used to indicate the validity of the first information. For example, the first information may be carried in any of the following messages: an RRC reconfiguration complete message, an RRC reestablishment complete message, an RRC resume complete message, a UE assistance information message, a UE information response message, an uplink information transfer message, an uplink information transfer message inter radio access technology, an uplink information transfer message for multi-rate dual connectivity message, a MAC-CE message, or a physical layer message.

After receiving the first information of the UE, the second network node may prepare, according to the first information of the UE, in advance for accessing the UE, for example, configuring radio resources for the UE in advance.

It should be noted that for other contents involved in each embodiment of this scenario, reference may be made to the description of relevant contents in the previous embodiments, which will not be repeated here.

It can be seen that during the process of UE accessing the second network node, the UE sends the first information of the UE to the second network node. Compared to the solution in which the UE sends the first information of the UE based on a request of the second network node after the UE accesses the second network node, the UE sends the first information of the UE to the second network node in advance in the embodiments of the present disclosure, which is conducive to reducing a delay of the UE accessing the second network node and improving an efficiency of the UE handing over to the second network node.

### Scenario 2: Multi-connectivity scenario (Dual connectivity scenario)

In some embodiments, a first network node sends first information to a second network node, in which the first network node is a master node accessed by the UE and the second network node is a secondary node accessed by the UE.

In a possible implementation, in a scenario of changing a secondary cell group of the UE, the first network node is a master node of the UE, and the second network node may be a source secondary node (source SN). The source SN refers to a secondary node before the secondary cell group of the UE is changed. Then, after receiving the first information of the UE sent by the first network node, the second network node initiates the change of the secondary cell group of the UE according to the first information. The change of the secondary cell group includes but is not limited to adding a new secondary cell, changing a secondary cell, modifying configuration information of a secondary cell, etc.

In another possible implementation, in a scenario of changing a secondary cell group of the UE, the first network node is a master node of the UE, and the second network node may be a target secondary node (target SN). There may be one or more target SNs. Then, after receiving the first information of the UE sent by the first network node, the second network node determines a target secondary cell group (for example the included secondary cells) and a configuration of the target secondary cell group according to the first information.

In an example, the first information may be carried in any of the following messages: an S-node addition request message, an S-node modification request message, an S-node modification confirm message, an S-node change confirm message, an S-node release request message or an RRC transfer message. For example, the first information of the UE may be included in cell group configuration information (CG-ConfigInfo) in the above message.

Optionally, before the first network node sends the first information to the second network node (the source SN of the UE or the target SN of the UE), the second network node may send first indication information to the first network node. The first indication information is used to indicate that the first network node needs to provide one or more of the first information of the UE. For example, the first indication information is in a retrieve UE context request message. In an example, the first indication information may be included in messages such as S-node modification required message, S-node change required message, etc. For example, the first indication information may be specifically included in the CG-ConfigInfo (cell group configuration information) in the above message.

In another possible implementation, in a scenario of changing a primary cell of the UE, the first network node may be, for example, a primary cell of the UE before changes, a currently serving primary cell, or a last serving primary cell, and the second network node may be, for example, a primary cell after handover. The scenario of changing the primary cell of the UE includes, but is not limited to, primary cell handover, RRC resume of a primary cell, RRC reestablishment of a primary cell, and the like.

In some other embodiments, the first network node sends the first information to the second network node, in which the first network node is a secondary node accessed by the UE and the second network node is a master node accessed by the UE.

It should be noted that for other contents involved in each embodiment of this scenario, reference may be made to the description of relevant contents in the previous embodiments, which will not be repeated here.

It can be seen from the above that when the UE has not accessed the second network node, the first network node that originally accessed the UE may send the first information of the UE to the second network node. In this way, a success rate of the UE handing over to the second network node may be improved, which is beneficial to reduce a delay of the UE accessing the second network node and improve an efficiency of the UE handing over to the second network node.

In some other embodiments, the UE may send the first information to the second network node, in which the second network node is a secondary node in a dual connection of the UE.

Optionally, before the UE sends the first information to the second network node, the second network node may send request information to the UE, in which the request information is used to request the UE to send the first information to the second network node. In an example, the second network node may send the request information to the UE through an SRB3, or a separate SRB1, or a separate SRB2, etc.

It should be noted that for other contents involved in each embodiment of this scenario, reference may be made to the description of relevant contents in the previous embodiments, which will not be repeated here.

It can be seen that the UE sends the first information of the UE to the second network node configured as the secondary node in the dual connection. Compared to the solution in which the UE sends the first information of the UE after receiving a report request, the UE sends the first information of the UE to the second network node in advance in the embodiments of the present disclosure, which is conducive to reducing a delay of the UE accessing the second network node, improving an efficiency of mobility management of the UE, improving a reliability of the mobility management of the UE and improving a coverage capability.

In order to further explain any embodiment of the present disclosure, several specific embodiments are provided below.

In an embodiment of the present disclosure, an information transmission method is proposed, which may include: a source node (or an old node) sending information related to a UAV UE to a target node (or a new node).

Taking into account a movement of the UAV UE and a change of a flight path, the embodiments of the present disclosure propose an information transmission method, which includes: the UE indicating validity of the information provided by the source node (old node) to the target node (new node) in a complete message.

Considering that UAV UE may also support DC in subsequent versions, a master node may send the information related to the UAV UE to a secondary node during the process of adding, modifying or changing an SCG (Secondary Cell Group).

The embodiments of the present disclosure provide an information transmission method, which may include the following steps:
a first network node sending first information to a second network node.

For example, the first information includes, but is not limited to, one or more of altitude information, speed information, location information, flight path information, or airborne status information reported by the UE.

For example, the UE is a UAV UE.

For example, the first information reported by the UE is related information most recently reported by the UE (to the first network node).

For example, the first network node is a current serving node (source node) or a last serving node (old node) of the UE.

For example, the second network node is a target node (handover target node) or a new node to be accessed by the UE (for RRC reestablishment or RRC resume).

For example, for a DC scenario, the first network node may be a master node (MN), the second network node may be a secondary node (SN).

The embodiments of the present disclosure provide an information transmission method, which may include the following steps:
during a handover process, a first network node (source node) sending first information of a UAV UE to a second network node (target node) through a handover request message, for example included in handover preparation information.

The embodiments of the present disclosure provide an information transmission method, which may include the following steps:
during an RRC reestablishment process or RRC resume process, a first network node (old node) sending first information to a second network node (new node) through a retrieve UE context response message.

For example, the first information of the UAV UE, configured as a kind of UE context information, is sent from the first network node to the second network node.

The embodiments of the present disclosure provide an information transmission method, which may include the following steps:
during an RRC reestablishment process or RRC resume process, a second network node sending first indication information to a first network node, in which the first indication information is used to indicate that the first network node needs to provide one or more of first information of a UAV UE.

For example, the first indication information is included in a retrieve UE context request message.

For example, the first indication information is used to request the first network node to provide altitude information (or speed information, or location information, or flight path information) of the UE.

For example, in response to the first indication information requesting the first network node to provide one or more of the first information of the UE, the first node send the corresponding first information to the second node through a retrieve UE context response.

The embodiments of the present disclosure provide an information transmission method, which may include the following steps:
for a UAV UE supporting DC, an MN sending first information of the UE to an SN.

For example, the MN may send the first information to a source SN, and the source SN may initiate SCG changing or configuration update according to the first information.

For example, the MN may send the first information to a target SN, and the target SN may determine a target SCG and a target SCG configuration according to the first information.

For example, the MN may carry the first information in a first message. The first message includes: an S-node addition request message, an S-node modification request message, an S-node modification confirm message, an S-node change confirm message, an S-node release request message or an RRC transfer message.

For example, the first information may be included in the CG-ConfigInfo, and sent to the SN through the first message.

The embodiments of the present disclosure provide an information transmission method, which may include the following steps:
for a UAV UE supporting DC, an SN sending first indication information to an MN, in which the first indication information is used to request the MN to provide one or more of first information of the UE.

For example, the indication information may be included in messages such as S-node modification required message, and/or S-node change required message, etc.

For example, the indication information may be included in the CG-ConfigInfo, and sent to the first network node through messages, such as S-node modification required message, and/or S-node change required message, etc.

The embodiments of the present disclosure provide an information transmission method, which may include the following steps:
for a UE in DC, an SCG sending a configuration information request to request the UE to directly report first information of the UE to the SCG.

For example, the configuration information request is sent through an SRB3, or a separate SRB 1, or a separate SRB2.

In some examples, the SN sends the first information of the UE obtained from the UE to the MN.

The embodiments of the present disclosure provide an information transmission method, which may include the following steps:
a first network node sending first information to a second network node, including: the first information of the UE and a time when the first network node receives the first information reported by the UE.

For example, the time when the first information (for example, the UE's altitude information, speed information, location information, flight path information and/or airborne status information) reported by the UE is received may be an absolute time (such as UTC time).

In some examples, in response to a difference between the time and a current time is greater than a threshold specified by a protocol, the first network node does not send the corresponding first information to the second network node, to prevent from sending invalid first information to the second network node.

The embodiments of the present disclosure provide an information transmission method, which may include the following steps:
a UE sending first information or a first information validity or invalidity indication to a second network node through a second message.

The UE may determine whether the first information is valid based on the first information (for example, altitude information, speed information, location information, flight path information and/or airborne status information) last reported to the first network node and the UE's current altitude information, speed information, location information, flight path information or airborne status information. If valid, the validity indication is reported; or, if invalid, the invalidity indication is reported.

The first information involved by the first information validity or invalidity indication is received by the second network node from the first network node.

In some examples, the second message may be a complete message.

For example, during a handover process, the UE may send the first information or the first information validity or invalidity indication to a target node through an RRC reconfiguration complete message.

For example, during a reestablishment process, the UE may send the first information or the first information validity or invalidity indication to a new node (a node corresponding to a cell for reestablishment) through an RRC reestablishment complete message.

For example, during a handover process, the UE may send the first information or the first information validity or invalidity indication to a new node (a node corresponding to a cell for resume) through an RRC resume complete message.

FIG 10 is a block diagram of an information transmission apparatus according to an embodiment of the present disclosure. The information transmission apparatus is applied in a first network node. As shown in FIG 10, the information transmission apparatus 100 may include a sending module 110.

The sending module 110 is configured to send first information of a UE to a second network node, in which the first information is used for mobility management of the UE.

In an embodiment, the first information includes at least one of altitude information, speed information, location information, flight path information, or airborne status information of the UE.

In an embodiment, the sending module 110 is configured to perform at least one of:
sending the first information of the UE to the second network node during a process of the UE performing a mobility operation; or
sending the first information of the UE to the second network node during a process of the UE performing communication with the first network node and the second network node in a dual connectivity network.

In an embodiment, in a case that the mobility operation is handover, the first network node is a current serving node of the UE, and the second network node is a target node to be accessed by the UE; or
in a case that the mobility operation is RRC reestablishment or RRC resume, the first network node is a last serving node of the UE, and the second network node is a node to be accessed by the UE.

In an embodiment, the sending module 110 is configured to perform at least one of:
sending the first information of the UE to the second network node through a handover request message during a handover process; or
sending the first information of the UE to the second network node through a retrieve UE context response message during an RRC reestablishment process or RRC resume process.

In an embodiment, the first network node is a master node in a dual connectivity network, and the second network node is a secondary node in the dual connectivity network; or
the first network node is a secondary node in a dual connectivity network, and the second network node is a master node in the dual connectivity network.

In an embodiment, the sending module 110 is configured to:
sending the first information of the UE to the second network node through a first message;
in which the first message includes at least one of:
a secondary node (S-node) addition request message;
an S-node modification request message;
an S-node modification confirm message;
an S-node change confirm message;
an S-node release request message; or
an RRC transfer message.

In an embodiment, the sending module 110 is configured to:
sending, to the second network node, first information most recently reported by the UE to the first network node.

In an embodiment, the sending module 110 is configured to:
sending a reception time at which the first network node receives the first information of the UE to the second network node.

In an embodiment, the sending module 110 is configured to:
in a case that a difference between the reception time and a current time is less than or equal to a time threshold, sending the first information to the second network node.

In an embodiment, the apparatus further includes:
a receiving module, configured to receive first indication information sent by the second network node, in which the first indication information instructs the first network node to send the first information to the second network node.

FIG 11 is a block diagram of an information transmission apparatus according to an embodiment of the present disclosure. The information transmission apparatus is applied in a second network node. As shown in FIG 11, the information transmission apparatus 200 may include a receiving module 210.

The receiving module 210 is configured to receive first information of a UE sent by a first network node, in which the first information is used for mobility management of the UE.

In an embodiment, the first information includes at least one of altitude information, speed information, location information, flight path information, or airborne status information of the UE.

In an embodiment, the receiving module 210 is configured to perform at least one of:
receiving the first information of the UE sent by the first network node during a process of the UE performing a mobility operation; or
receiving the first information of the UE sent by the first network node during a process of the UE performing communication with the first network node and the second network node in a dual connectivity network.

In an embodiment, in a case that the mobility operation is handover, the first network node is a current serving node of the UE, and the second network node is a target node to be accessed by the UE.

Or, in a case that the mobility operation is RRC reestablishment or RRC resume, the first network node is a last serving node of the UE, and the second network node is a node to be accessed by the UE.

In an embodiment, the receiving module 210 is configured to perform at least one of:
receiving the first information of the UE sent by the first network node through a handover request message during a handover process; or
receiving the first information of the UE sent by the first network node through a retrieve UE context response message during an RRC reestablishment process or RRC resume process.

In an embodiment, the first network node is a master node in a dual connectivity network, and the second network node is a secondary node in the dual connectivity network.

Or, the first network node is a secondary node in a dual connectivity network, and the second network node is a master node in the dual connectivity network.

In an embodiment, the receiving module 210 is configured to:
receive the first information of the UE sent by the first network node through a first message;
in which the first message includes at least one of:
a secondary node (S-node) addition request message;
an S-node modification request message;
an S-node modification confirm message;
an S-node change confirm message;
an S-node release request message; or
an RRC transfer message.

In an embodiment, the receiving module 210 is configured to:
receive first information of the UE sent by the first network node and most recently reported by the UE to the first network node.

In an embodiment, the receiving module 210 is configured to:
receive a reception time at which the first network node receives the first information of the UE.

In an embodiment, the apparatus further includes:
a sending module, configured to send first indication information to the first network node, in which the first indication information instructs the first network node to send the first information to the second network node.

In an embodiment, the receiving module 210 is configured to:
receive second indication information sent by the UE, in which the second indication information indicates whether the first information of the UE from the first network node is valid.

In an embodiment, the receiving module 210 is configured to:
receive the second indication information sent by the UE through a second message.

The second message includes but is not limited to at least one of the following:
an RRC reconfiguration complete message;
an RRC reestablishment complete message;
an RRC resume complete message;
a UE assistance information message;
a UE information response message;
an uplink information transfer message;
an uplink information transfer inter radio access technology message;
an uplink information transfer for multi-rate dual connectivity message;
a MAC-CE message; or
a physical layer message.

FIG 12 is a block diagram of an information transmission apparatus according to an embodiment of the present disclosure. The information transmission apparatus is applied in a UE. As shown in FIG 12, the information transmission apparatus 300 may include a sending module 310.

The sending module 310 is configured to, during a process of the UE accessing a second network node, send first information of the UE or second indication information to the second network node, in which the second indication information indicates whether the first information of the UE from a first network node is valid, and the first information is used for mobility management of the UE.

In an embodiment, the first information includes at least one of altitude information, speed information, location information, flight path information, or airborne status information of the UE.

In an embodiment, in a case that a mobility operation performed by the UE is handover, the first network node is a current serving node of the UE, and the second network node is a target node to be accessed by the UE.

Or, in a case that a mobility operation performed by the UE is RRC reestablishment or RRC resume, the first network node is a last serving node of the UE, and the second network node is a node to be accessed by the UE.

In an embodiment, the sending module 310 is configured to:
send the first information of the UE or the second indication information to the second network node through at least one of the following:
an RRC reconfiguration complete message;
an RRC reestablishment complete message;
an RRC resume complete message;
a UE assistance information message;
a UE information response message;
an uplink information transfer message;
an uplink information transfer inter radio access technology message;
an uplink information transfer for multi-rate dual connectivity message;
a media access control-control element (MAC-CE) message; or
a physical layer message.

FIG 13 is a block diagram of an information transmission apparatus according to an embodiment of the present disclosure. The information transmission apparatus is applied in a second network node. As shown in FIG 13, the information transmission apparatus 400 may include a receiving module 410.

The receiving module 410 is configured to receive first information of a UE or second indication information sent by the UE during a process of accessing the second network node, in which the second indication information indicates whether the first information of the UE from a first network node is valid, the first information is used for mobility management of the UE.

In an embodiment, the first information includes at least one of altitude information, speed information, location information, flight path information, or airborne status information of the UE.

In an embodiment, in a case that the mobility operation performed by the UE is handover, the first network node is a current serving node of the UE, and the second network node is a target node to be accessed by the UE.

Or, in a case that the mobility operation performed by the UE is RRC reestablishment or RRC resume, the first network node is a last serving node of the UE, and the second network node is a node to be accessed by the UE.

In an embodiment, the receiving module 410 is configured to:
receive the first information or the second indication information sent by the UE through at least one of the following:
an RRC reconfiguration complete message;
an RRC reestablishment complete message;
an RRC resume complete message;
a UE assistance information message;
a UE information response message;
an uplink information transfer message;
an uplink information transfer inter radio access technology message;
an uplink information transfer for multi-rate dual connectivity message;
a MAC-CE message; or
a physical layer message.

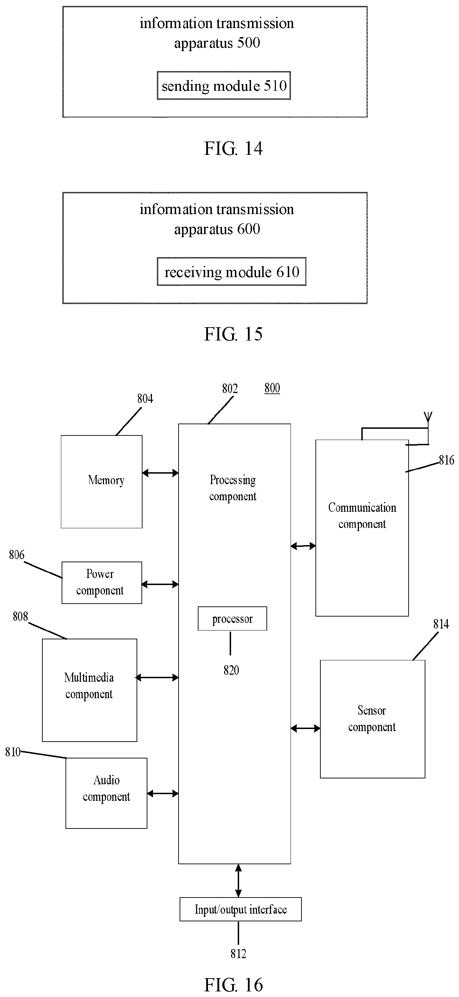

FIG 14 is a block diagram of an information transmission apparatus according to an embodiment of the present disclosure. The information transmission apparatus is applied in a UE. As shown in FIG 14, the information transmission apparatus 500 may include a sending module 510.

The sending module 510 is configured to send first information of the UE to a second network node, in which the first information is used for mobility management of the UE, and the second network node is a secondary node in a dual connectivity network.

In an embodiment, the first information includes at least one of altitude information, speed information, location information, flight path information, or airborne status information of the UE.

In an embodiment, the apparatus further includes:
a receiving module, configured to receive request information related to the second network node and sent by the second network node, in which the request information instructs the UE to send the first information.

FIG 15 is a block diagram of an information transmission apparatus according to an embodiment of the present disclosure. The information transmission apparatus is applied in a second network node, and the second network node is a secondary node in a dual connectivity network. As shown in FIG 15, the information transmission apparatus 600 may include a receiving module 610.

The receiving module 610 is configured to receive first information of the UE sent by the UE, in which the first information is used for mobility management of the UE.

In an embodiment, the first information includes at least one of altitude information, speed information, location information, flight path information, or airborne status information of the UE.

In an embodiment, the apparatus further includes:
a first sending module, configured to send request information related to the second network node to the UE, in which the request information instructs the UE to send the first information.

In an embodiment, the apparatus further includes:
a second sending module, configured to send the first information of the UE to a first network node, in which the first network node is a master node in the dual connectivity network.

Regarding the apparatus in the above embodiment, the specific manner in which each module performs operations has been described in detail in the method embodiments, and will not be elaborated here.

The embodiments of the present disclosure provide a communication device, including:
a memory, configured to store instructions executable by a processor,
a processor, connected to the memory;
in which the processor is configured to perform the information transmission method of any one of the technical solutions.

The processor may include various types of storage media, which are non-transitory computer storage media that can continue to remember information stored thereon after the communication device loses power.

Here, the communication device includes: a UE or a network node, in which the network node may be the aforementioned first network node or second network node.

The processor may be connected to the memory via a bus or the like, and is used to read an executable program stored in the memory, for example, to perform at least one of the information transmission methods shown in FIG. 2 to FIG. 9.

FIG 16 is a block diagram of a UE 800 according to an embodiment. For example, the UE 800 may be an unmanned aerial vehicle, a mobile phone, a computer, a digital broadcasting terminal, a message transceiver device, a game console, a tablet device, and a personal digital assistant.

As illustrated in FIG 16, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processor 820 to perform all or part of the steps in the above described method. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read-Only Memory (PROM), a Read Only Memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensor to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front-facing camera and/or a rear-facing camera. When the UE 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensor to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a Complementary Metal Oxide Semiconductor (CMOS) or Charge-Coupled Device (CCD) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as WiFi, 4G, or 5G, or a combination thereof. In an exemplary embodiment, the communication component 816 receives a broadcast signal or broadcast associated information from an external broadcast management system via a broadcast channel. In an exemplary embodiment, the communication component 816 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In the exemplary embodiment, the UE 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described method.

In the exemplary embodiments, there is also provided a non-transitory computer readable storage medium including executable instructions, such as the memory 804, executable by the processor 820 in the UE 800, for performing the above method. For example, the non-transitory computer-readable storage medium may be a ROM, a Random Access Memory (RAM), a CD-ROM, a magnetic tape, a floppy disc, and an optical data storage device.

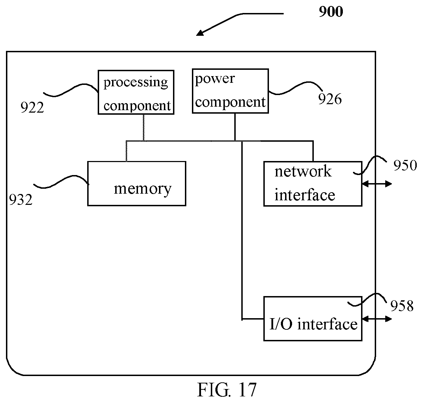

As shown in FIG 17, an embodiment of the present disclosure shows a structure of a communication device. For example, the communication device 900 may be provided as a network side device. The communication device may be the aforementioned first network node or second network node.

With reference to FIG 17, the communication device 900 includes a processing component 922, which further includes one or more processors, and a memory resource represented by a memory 932 for storing instructions that can be executed by the processing component 922, such as an application. The application stored in the memory 932 may include one or more modules each corresponding to a set of instructions. In addition, the processing component 922 is configured to execute instructions to perform the above-mentioned method, such as the aforementioned information transmission method applied in the first network node or the second network node.

The communication device 900 may also include a power component 926 configured to perform power management of the communication device 900, a wired or wireless network interface 950 configured to connect the communication device 900 to a network, and an input/output (I/O) interface 958. The communication device 900 may operate based on an operating system stored in the memory 932, such as Windows Server ^{™}, Mac OS X ^{™}, Unix ^{™}, Linux ^{™}, FreeBSD ^{™} or the like.

Those skilled in the art will readily appreciate other embodiments of the present disclosure after considering the specification and practicing the invention disclosed herein. The present disclosure is intended to cover any variations, uses, or adaptations of the present disclosure that follow the general principles of the present disclosure and include common knowledge or customary techniques in the art that are not disclosed in the present disclosure. The description and examples are to be regarded as exemplary only, and the true scope and spirit of the present disclosure are indicated by the following claims.

It should be understood that the present disclosure is not limited to the exact structures that have been described above and shown in the drawings, and that various modifications and changes may be made without departing from the scope thereof. The scope of the present disclosure is limited only by the appended claims.

## Claims

1. An information transmission method, performed by a first network node, comprising:
sending, by the first network node, first information of a user equipment (UE) to a second network node, wherein the first information is used for mobility management of the UE.

2. The method of claim 1, wherein the first information comprises at least one of altitude information, speed information, location information, flight path information, or airborne status information of the UE.

3. The method of claim 1 or 2, wherein sending, by the first network node, the first information of the UE to the second network node comprises at least one of:
sending the first information of the UE to the second network node during a process of the UE performing a mobility operation; or
sending the first information of the UE to the second network node during a process of the UE performing communication with the first network node and the second network node in a dual connectivity network.

4. The method of claim 3, wherein
in a case that the mobility operation is handover, the first network node is a current serving node of the UE, and the second network node is a target node to be accessed by the UE; or
in a case that the mobility operation is radio resource control (RRC) reestablishment or RRC resume, the first network node is a last serving node of the UE, and the second network node is a node to be accessed by the UE.

5. The method of claim 4, wherein sending the first information of the UE to the second network node during the process of the UE performing the mobility operation comprises at least one of:
sending the first information of the UE to the second network node through a handover request message during a handover process; or
sending the first information of the UE to the second network node through a retrieve UE context response message during an RRC reestablishment process or RRC resume process.

6. The method of claim 3, wherein
the first network node is a master node in the dual connectivity network, and the second network node is a secondary node in the dual connectivity network; or
the first network node is a secondary node in the dual connectivity network, and the second network node is a master node in the dual connectivity network.

7. The method of claim 6, wherein sending the first information of the UE to the second network node comprises:
sending the first information of the UE to the second network node through a first message;
wherein, the first message comprises at least one of:
a secondary node (S-node) addition request message;
an S-node modification request message;
an S-node modification confirm message;
an S-node change confirm message;
an S-node release request message; or
an RRC transfer message.

8. The method of claim 1, wherein sending, by the first network node, the first information of the UE to the second network node comprises:
sending, to the second network node, first information most recently reported by the UE to the first network node.

9. The method of any of claims 1-8, further comprising:
sending a reception time at which the first network node receives the first information of the UE to the second network node.

10. The method of claim 9, wherein sending, by the first network node, the first information of the UE to the second network node comprises:
in a case that a difference between the reception time and a current time is less than or equal to a time threshold, sending the first information to the second network node.

11. The method of any of claims 1-10, further comprising:
receiving first indication information sent by the second network node, wherein the first indication information instructs the first network node to send the first information to the second network node.

12. An information transmission method, performed by a second network node, comprising:
receiving first information of a user equipment (UE) sent by a first network node, wherein the first information is used for mobility management of the UE.

13. The method of claim 12, wherein the first information comprises at least one of altitude information, speed information, location information, flight path information, or airborne status information of the UE.

14. The method of claim 12 or 13, wherein receiving the first information of the UE sent by the first network node comprises at least one of:
receiving the first information of the UE sent by the first network node during a process of the UE performing a mobility operation; or
receiving the first information of the UE sent by the first network node during a process of the UE performing communication with the first network node and the second network node in a dual connectivity network.

15. The method of claim 14, wherein
in a case that the mobility operation is handover, the first network node is a current serving node of the UE, and the second network node is a target node to be accessed by the UE; or
in a case that the mobility operation is radio resource control (RRC) reestablishment or RRC resume, the first network node is a last serving node of the UE, and the second network node is a node to be accessed by the UE.

16. The method of claim 15, wherein receiving the first information of the UE sent by the first network node during the process of the UE performing the mobility operation comprises at least one of:
receiving the first information of the UE sent by the first network node through a handover request message during a handover process; or
receiving the first information of the UE sent by the first network node through a retrieve UE context response message during an RRC reestablishment process or RRC resume process.

17. The method of claim 14, wherein
the first network node is a master node in the dual connectivity network, and the second network node is a secondary node in the dual connectivity network; or
the first network node is a secondary node in the dual connectivity network, and the second network node is a master node in the dual connectivity network.

18. The method of claim 17, wherein receiving the first information of the UE sent by the first network node comprises:
receiving the first information of the UE sent by the first network node through a first message;
wherein, the first message comprises at least one of:
a secondary node (S-node) addition request message;
an S-node modification request message;
an S-node modification confirm message;
an S-node change confirm message;
an S-node release request message; or
an RRC transfer message.

19. The method of claim 12, wherein receiving the first information of the UE sent by the first network node comprises:
receiving first information sent by the first network node and most recently reported by the UE to the first network node.

20. The method of any of claims 12-19, further comprising:
receiving a reception time at which the first network node receives the first information of the UE.

21. The method of any of claims 12-19, further comprising:
sending first indication information to the first network node, wherein the first indication information instructs the first network node to send the first information to the second network node.

22. The method of any of claims 12-16, further comprising:
receiving second indication information sent by the UE, wherein the second indication information indicates whether the first information of the UE from the first network node is valid.

23. The method of claim 22, wherein receiving the second indication information sent by the UE comprises:
receiving the second indication information sent by the UE through a second message;
wherein, the second message comprises at least one of:
an RRC reconfiguration complete (RRCReconfigurationComplete) message;
an RRC reestablishment complete (RRCReestablishmentComplete) message;
an RRC resume complete (RRCResumeComplete) message;
a UE assistance information (UEAssistanceInformation) message;
a UE information response (UEInformationResponse) message;
an uplink information transfer (ULInformationTransfer) message;
an uplink information transfer inter radio access technology (ULInformationTransferIRAT) message;
an uplink information transfer for multi-rate dual connectivity (ULInformationTransferMRDC) message;
a media access control-control element (MAC-CE) message; or
a physical layer message.

24. An information transmission method, performed by a user equipment (UE), comprising:
sending first information of the UE or second indication information to a second network node during a process of the UE accessing the second network node, wherein the second indication information indicates whether first information of the UE from a first network node is valid, and the first information is used for mobility management of the UE.

25. The method of claim 24, wherein the first information comprises at least one of altitude information, speed information, location information, flight path information, or airborne status information of the UE.

26. The method of claim 24 or 25, wherein
in a case that a mobility operation performed by the UE is handover, the first network node is a current serving node of the UE, and the second network node is a target node to be accessed by the UE; or
in a case that a mobility operation performed by the UE is radio resource control (RRC) reestablishment or RRC resume, the first network node is a last serving node of the UE, and the second network node is a node to be accessed by the UE.

27. The method of any of claims 24-26, wherein sending the first information of the UE or the second indication information to the second network node during the process of the UE accessing the second network node comprises:
sending the first information of the UE or the second indication information to the second network node through at least one of:
an RRC reconfiguration complete (RRCReconfigurationComplete) message;
an RRC reestablishment complete (RRCReestablishmentComplete) message;
an RRC resume complete (RRCResumeComplete) message;
a UE assistance information (UEAssistanceInformation) message;
a UE information response (UEInformationResponse) message;
an uplink information transfer (ULInformationTransfer) message;
an uplink information transfer inter radio access technology (ULInformationTransferIRAT) message;
an uplink information transfer for multi-rate dual connectivity (ULInformationTransferMRDC) message;
a media access control-control element (MAC-CE) message; or
a physical layer message.

28. An information transmission method, performed by a second network node, comprising:
receiving first information of a user equipment (UE) or second indication information sent by the UE during a process of the UE accessing the second network node, wherein the second indication information indicates whether the first information of the UE from a first network node is valid, and the first information is used for mobility management of the UE.

29. The method of claim 28, wherein the first information comprises at least one of altitude information, speed information, location information, flight path information, or airborne status information of the UE.

30. The method of claim 28 or 29, wherein
in a case that a mobility operation performed by the UE is handover, the first network node is a current serving node of the UE, and the second network node is a target node to be accessed by the UE; or
in a case that a mobility operation performed by the UE is radio resource control (RRC) reestablishment or RRC resume, the first network node is a last serving node of the UE, and the second network node is a node to be accessed by the UE.

31. The method of any of claims 28-30, wherein receiving the first information of the UE or the second indication information sent by the UE during the process of the UE accessing the second network node comprises:
receiving the first information of the UE or the second indication information sent by the UE through at least one of:
an RRC reconfiguration complete (RRCReconfigurationComplete) message;
an RRC reestablishment complete (RRCReestablishmentComplete) message;
an RRC resume complete (RRCResumeComplete) message;
a UE assistance information (UEAssistanceInformation) message;
a UE information response (UEInformationResponse) message;
an uplink information transfer (ULInformationTransfer) message;
an uplink information transfer inter radio access technology (ULInformationTransferIRAT) message;
an uplink information transfer for multi-rate dual connectivity (ULInformationTransferMRDC) message;
a media access control-control element (MAC-CE) message; or
a physical layer message.

32. An information transmission method, performed by a user equipment (UE), comprising:
sending first information of the UE to a second network node, wherein the first information is used for mobility management of the UE, and the second network node is a secondary node in a dual connectivity network.

33. The method of claim 32, wherein the first information comprises at least one of altitude information, speed information, location information, flight path information, or airborne status information of the UE.

34. The method of claim 32 or 33, further comprising:
receiving request information related to the second network node and sent by the second network node, wherein the request information instructs the UE to send the first information.

35. An information transmission method, performed by a second network node, wherein the second network node is a secondary node in a dual connectivity network and the method comprises:
receiving first information of a user equipment (UE) sent by the UE, wherein the first information is used for mobility management of the UE.

36. The method of claim 35, wherein the first information comprises at least one of altitude information, speed information, location information, flight path information, or airborne status information of the UE.

37. The method of claim 35 or 36, further comprising:
sending request information related to the second network node to the UE, wherein the request information instructs the UE to send the first information.

38. The method of any of claims 35-37, further comprising:
sending first information of the UE to a first network node, wherein the first network node is a master node in the dual connectivity network.

39. An information transmission apparatus, applied in a first network node, comprising:
a sending module, configured to send first information of a user equipment (UE) to a second network node, wherein the first information is used for mobility management of the UE.

40. An information transmission apparatus, applied in a second network node, comprising:
a receiving module, configured to receive first information of a user equipment (UE) sent by a first network node, wherein the first information is used for mobility management of the UE.

41. An information transmission apparatus, applied in a user equipment (UE), comprising:
a sending module, configured to send first information of the UE or second indication information to a second network node during a process of the UE accessing the second network node, wherein the second indication information indicates whether the first information of the UE from a first network node is valid, and the first information is used for mobility management of the UE.

42. An information transmission apparatus, applied in a second network node, comprising:
a receiving module, configured to receive first information of a user equipment (UE) or second indication information sent by the UE during a process of the UE accessing the second network node, wherein the second indication information indicates whether the first information of the UE from a first network node is valid, and the first information is used for mobility management of the UE.

43. An information transmission apparatus, applied in a user equipment (UE), comprising:
a sending module, configured to send first information of the UE to a second network node, wherein the first information is used for mobility management of the UE, and the second network node is a secondary node in a dual connectivity network.

44. An information transmission apparatus, applied in a second network node, wherein the second network node is a secondary node in a dual connectivity network and the apparatus comprises:
a receiving module, configured to receive first information of a user equipment (UE) sent by the UE, wherein the first information is used for mobility management of the UE.

45. A communication device, comprising: a processor, a memory, and an executable program stored in the memory and executable by the processor, wherein the processor performs the information transmission method of any one of claims 1 to 38 when running the executable program.

46. A computer storage medium for storing an executable program, wherein when the executable program is executed, the information transmission method of any one of claims 1 to 38 is implemented.
